(19) **Europäisches Patentamt** / **European Patent Office** / **Office européen des brevets**

(11) **EP 4 503 058 A1**

(12) **EUROPEAN PATENT APPLICATION**
published in accordance with Art. 153(4) EPC

(43) Date of publication:
05.02.2025 Bulletin 2025/06

(21) Application number: 23780870.4

(22) Date of filing: 30.03.2023

(51) International Patent Classification (IPC):
$H01B\ 1/10^{(2006.01)}$     $C01B\ 25/14^{(2006.01)}$
$H01B\ 1/06^{(2006.01)}$     $H01B\ 13/00^{(2006.01)}$
$H01M\ 4/13^{(2010.01)}$     $H01M\ 4/139^{(2010.01)}$
$H01M\ 4/62^{(2006.01)}$     $H01M\ 10/052^{(2010.01)}$
$H01M\ 10/0562^{(2010.01)}$

(52) Cooperative Patent Classification (CPC):
C01B 25/14; H01B 1/06; H01B 1/10; H01B 13/00;
H01M 4/13; H01M 4/139; H01M 4/62;
H01M 10/052; H01M 10/0562; Y02E 60/10

(86) International application number:
PCT/JP2023/013168

(87) International publication number:
WO 2023/190862 (05.10.2023 Gazette 2023/40)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 31.03.2022 JP 2022061407

(71) Applicant: **Idemitsu Kosan Co.,Ltd.**
**Tokyo 100-8321 (JP)**

(72) Inventors:
• **TERAI Kota**
**Tokyo 100-8321 (JP)**
• **OKAMOTO Yuji**
**Tokyo 100-8321 (JP)**
• **YANAGI Kazuaki**
**Tokyo 100-8321 (JP)**

(74) Representative: **Vossius & Partner**
**Patentanwälte Rechtsanwälte mbB**
**Siebertstrasse 3**
**81675 München (DE)**

(54) **SULFIDE SOLID ELECTROLYTE GLASS CERAMIC AND MANUFACTURING METHOD FOR SAME**

(57) Provided is a sulfide solid electrolyte ceramic containing a lithium atom, a sulfur atom, a phosphorus atom, and a halogen atom and having peaks at diffraction angles (2θ) of 20.2° and 29.3° in X-ray diffractometry using CuKα line. Due to an intensity ratio ($P_A/P_B$) of a peak intensity ($P_A$) of the peak appearing at 2θ=20.2° to a peak intensity ($P_B$) of the peak appearing at 2θ=29.3° made into more than 1.0, the sulfide solid electrolyte glass ceramic has a high ionic conductivity and has an increased water resistance. A method for producing the sulfide solid electrolyte glass ceramic is also provided.

[Fig. 12]

EP 4 503 058 A1

## Description

Technical Field

The present invention relates to a sulfide solid electrolyte glass ceramic and a method for producing the same.

Background Art

With rapid spread of information-related devices, communication devices, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of a battery having a solid electrolyte layer in place of an electrolytic solution is being made in view of the fact that by making the battery fully solid, simplification of a safety unit can be achieved without using a flammable organic solvent within the battery and the battery is excellent in manufacturing costs and productivity.

As a solid electrolyte used in a solid electrolyte layer, a sulfide solid electrolyte has heretofore been known, and such a sulfide solid electrolyte is desired to be further increased in the ionic conductivity.

The ionic conductivity is determined by the kinds and composition of raw materials used for producing the solid electrolyte, and by the crystal form of the solid electrolyte produced. For example, in order to improve the ionic conductivity of a sulfide solid electrolyte, optimization of the crystal form thereof has been studied (PTL 1).

Citation List

Patent Literature

PTL 1: JP 2014-89971 A

Summary of Invention

Technical Problem

The present invention has made in view of such circumstances, and has an object to provide a sulfide solid electrolyte glass ceramic having a high ionic conductivity, an electrode mixture material and a lithium ion battery obtained by using the same, and a method for producing the sulfide solid electrolyte glass ceramic.

Solution to Problem

The sulfide solid electrolyte glass ceramic according to the present invention is a sulfide solid electrolyte glass ceramic

containing a lithium atom, a sulfur atom, a phosphorus atom, and a halogen atom, and
having peaks at diffraction angles ($2\theta$) of 20.2° and 29.3° in X-ray diffractometry using CuK$\alpha$ line, an intensity ratio ($P_A/P_B$) of a peak intensity ($P_A$) of the peak appearing at $2\theta=20.2°$ to a peak intensity ($P_B$) of the peak appearing at $2\theta=29.3°$ being more than 1.0,
the method for producing a sulfide solid electrolyte glass ceramic according to the present invention is a method for producing a sulfide solid electrolyte glass ceramic, the method including
treating lithium sulfide ($Li_2S$) and phosphorus sulfide ($P_2S_5$) by at least one selected from stirring, mixing, and pulverization to produce a solid electrolyte (A), and
treating the solid electrolyte (A) and a lithium halide by at least one selected from stirring, mixing, and pulverization to produce a solid electrolyte (B),
the electrode mixture material according to the present invention is an electrode mixture material
containing the sulfide solid electrolyte glass ceramic and an electrode active material, and
the lithium ion battery according to the present invention is a lithium ion battery
containing at least one of the sulfide solid electrolyte glass ceramic and the electrode mixture material.

In the present description, a peak position may vary within the range of ±0.5°.

Advantageous Effects of Invention

According to the present invention, it is possible to provide a sulfide solid electrolyte glass ceramic having a high ionic conductivity, and an electrode mixture material and a lithium ion battery obtained by using the same, and a method for producing the sulfide solid electrolyte glass ceramic.

Brief Description of Drawings

Fig. 1 is a flow chart for explaining an example of an aspect of the production method of this embodiment.
Fig. 2 is a diagram for explaining a method for removing the background and calculating the area of a 20.2° peak in X-ray diffraction (XRD) of Example 1.
Fig. 3 is a diagram for explaining a method for removing the background and calculating the area of a 29.3° peak in X-ray diffraction (XRD) of Example 1.
Fig. 4 is a diagram for explaining a method for removing the background and calculating the area of a 20.2° peak in X-ray diffraction (XRD) of Comparative Example 1.
Fig. 5 is a diagram for explaining a method for removing the background and calculating the area of a 29.3° peak in X-ray diffraction (XRD) of Comparative Example 1.
Fig. 6 is a diagram for explaining a method for calculating a crystallite diameter (X-ray diffraction (XRD) measurement).
Fig. 7 is a diagram for explaining a method for calculating a crystallite diameter (X-ray diffraction (XRD) measurement).
Fig. 8 illustrates an exposure test apparatus for evaluating water resistance.
Fig. 9 is an X-ray diffraction (XRD) measurement result of a solid electrolyte (A1) obtained in a step (A) of Example 1.
Fig. 10 is an X-ray diffraction (XRD) measurement result of a crystalline solid electrolyte (A2) obtained in the step (A) of Example 1.
Fig. 11 is an X-ray diffraction (XRD) measurement result of an amorphous solid electrolyte (B1) obtained in a step (B) of Example 1.
Fig. 12 is an X-ray diffraction (XRD) measurement result of a sulfide solid electrolyte glass ceramic (1) obtained in the step (B) of Example 1.
Fig. 13 is an X-ray diffraction (XRD) measurement result of a sulfide solid electrolyte glass ceramic (C1) obtained in Comparative Example 1.

Description of Embodiments

An embodiment of the present invention (hereinafter sometimes referred to as "this embodiment") will be described below. In the present description, upper limit values and lower limit values relating to a numerical range accompanied with "or more", "or less", and "to" are numerical values that can be combined in any combination, and the values in Examples can be used as an upper limit value or a lower limit value.

(Findings that the present inventors have acquired to achieve the present invention)

As a result of intensive and extensive studies for solving the above problem, the present inventors have found the following matters, thus completing the present invention.
As disclosed in PTL 1, it has been found that a sulfide solid electrolyte has $PS_4^{3-}$ as a main backbone and that peaks are observed at specific positions in an XRD measurement. However, the resulting ionic conductivity of the sulfide solid electrolyte has needed to be further improved.
The present inventors have found that a sulfide solid electrolyte glass ceramic has peaks at specific positions obtained in an X-ray diffraction (XRD) measurement and that the ionic conductivity is increased when the intensity ratio ($P_A/P_B$) of the peak intensity ($P_A$) of a peak appearing at $2\theta=20.2°$ to the peak intensity ($P_B$) of a peak appearing at $2\theta=29.3°$ is within a specific range.
Then, the present inventors have found that an electrode mixture material and a lithium ion battery obtained by using such a sulfide solid electrolyte glass ceramic have excellent characteristics and that the sulfide solid electrolyte glass ceramic can be obtained by the production method in a simple manner and in a high yield.
The sulfide solid electrolyte glass ceramic has peaks at specific positions in an X-ray diffraction (XRD) measurement, has a specific crystallite diameter, and has a superior ionic conductivity when the $P_A/P_B$ value is within a specific range. This is a phenomenon that has heretofore not been recognized at all. It has also been found that in the method for producing a sulfide solid electrolyte glass ceramic, the ionic conductivity of the sulfide solid electrolyte glass ceramic is increased only by changing a conventionally used method of addition of raw materials. In addition, the water resistance is also increased, and a battery obtained therefrom is superior in the irreversible capacity. Thus, this embodiment is a very excellent production method.

Hereinunder, sulfide solid electrolyte glass ceramics according to a first to eleventh aspects of this embodiment, methods for producing a sulfide solid electrolyte glass ceramic according to a twelfth to thirteenth aspects of this embodiment, an electrode mixture material according to a fourteenth aspect of this embodiment, and a lithium ion battery according to a fifteenth aspect of this embodiment will be described.

A sulfide solid electrolyte glass ceramic according to the first aspect of this embodiment is a sulfide solid electrolyte glass ceramic containing a lithium atom, a sulfur atom, a phosphorus atom, and a halogen atom, the sulfide solid electrolyte glass ceramic

having peaks at diffraction angles ($2\theta$) of 20.2° and 29.3° in X-ray diffractometry using $CuK\alpha$ line, an intensity ratio ($P_A/P_B$) of a peak intensity ($P_A$) of the peak appearing at $2\theta=20.2°$ and a peak intensity ($P_B$) of the peak appearing at $2\theta=29.3°$ being more than 1.0, and
having a crystallite diameter of 30 nm or more.

The measurement of a peak intensity by XRD using $CuK\alpha$ line can be performed, for example, by a method described in the section of Examples or the like.

The sulfide solid electrolyte glass ceramic of the invention disclosed in PTL 1 focuses on the fact that a sulfide solid electrolyte glass ceramic has peaks at specific positions in an X-ray diffraction (XRD) measurement, but differs from the sulfide solid electrolyte glass ceramic according to the first aspect in a point of not having a peak at $2\theta=29.3°$. This means that the sulfide solid electrolyte glass ceramic of this embodiment contains a crystal structure different from that of the solid electrolyte disclosed in PTL 1. It has been found that the sulfide solid electrolyte glass ceramic according to the first aspect has a high ionic conductivity due to the fact that the sulfide solid electrolyte glass ceramic has peaks at specific positions and furthermore, the intensity ratio ($P_A/P_B$) of the peak intensities as described later is more than 1.0.

The reason why the sulfide solid electrolyte glass ceramic according to the first aspect has a superior ionic conductivity is not clear. However, it is considered that, even when atoms constituting the sulfide solid electrolyte glass ceramic are the same, sulfide solid electrolyte glass ceramics having different crystal structures are obtained depending on the contents thereof and the production method, and when a sulfide solid electrolyte glass ceramic has peaks at specific peak positions in an XRD measurement and the intensity ratio of the peak intensities of the peaks is within a specific range, the sulfide solid electrolyte glass ceramic largely contains a crystal structure and has a high ionic conductivity.

Due to an increase in the crystallite diameter to 30 nm or more, the proportion of the grain boundary is reduced. Since diffusion of lithium ions is inhibited in the grain boundary, a decreased proportion of the grain boundary leads to an increased ionic conductivity of the sulfide solid electrolyte glass ceramic.

The crystallite diameter can be measured, for example, by a method described in the section of Examples.

A sulfide solid electrolyte glass ceramic according to the second aspect of this embodiment is the sulfide solid electrolyte glass ceramic of the first aspect, in which
an intensity ratio ($I_A/I_B$) of a peak area intensity ($I_A$) of the peak appearing at $2\theta=20.2°$ to a peak area intensity ($I_B$) of the peak appearing at $2\theta=29.3°$ is 0.78 or more.

A peak area intensity measurement can be determined by XRD using $CuK\alpha$ line, and can be performed, for example, by a method described in the section of Examples or the like.

When the sulfide solid electrolyte glass ceramic of this embodiment corresponds to the first aspect, and in addition, the intensity ratio ($I_A/I_B$) of the peak area intensities is 0.78 or more, a sulfide solid electrolyte glass ceramic having an increased ionic conductivity is obtained, and thus, this is preferable.

A sulfide solid electrolyte glass ceramic according to the third aspect of this embodiment is the sulfide solid electrolyte glass ceramic of the first or second aspect,
further having a peak at $2\theta=23.6°$.

The sulfide solid electrolyte glass ceramic which corresponds to the first aspect, and in addition, has a peak at $2\theta=23.6°$ has an increased ionic conductivity, and thus, this is preferable.

A sulfide solid electrolyte glass ceramic according to the fourth aspect of this embodiment is the sulfide solid electrolyte glass ceramic of any one of the first to third aspects,
containing an iodine atom as the halogen atom.

When a sulfide solid electrolyte glass ceramic corresponds to the first aspect, and in addition, contains an iodine atom, the ionic conductivity is further increased, and thus, this is preferable. Due to the halogen atom contained, water resistance as described later is also increased, and thus, this is preferable.

A sulfide solid electrolyte glass ceramic according to the fifth aspect of this embodiment is the sulfide solid electrolyte glass ceramic of the fourth aspect,

further containing a bromine atom as the halogen atom.

When a sulfide solid electrolyte glass ceramic corresponds to the fourth aspect, and in addition, contains a bromine atom, the crystal structure is liable to form a thio-LISICON Region II-type crystal structure as described later, and thus, this is preferable.

A sulfide solid electrolyte glass ceramic according to the sixth aspect of this embodiment is the sulfide solid electrolyte glass ceramic of the fifth aspect, in which

a content of the bromine atom ($M_{Br}$ mol) and a content of the iodine atom ($M_I$ mol) in the sulfide solid electrolyte glass ceramic satisfy a relation of $M_{Br}/M_I \leq 1.00$.

When a sulfide solid electrolyte glass ceramic corresponds to the first aspect and in addition, the bromine atom and the iodine atom, if contained, satisfy the relation of $M_{Br}/M_I \leq 1.00$, the ionic conductivity is further increased and the water resistance described later is also increased, and thus, this is preferable.

The content of the bromine atom ($M_{Br}$ mol) and the content of the iodine atom ($M_I$ mol) can be measured, for example, by a method described in the section of Examples.

A sulfide solid electrolyte glass ceramic according to the seventh aspect of this embodiment is the sulfide solid electrolyte glass ceramic of any one of the first to sixth aspects, in which

a $P_2S_6^{4-}$ phosphorous ratio determined by a solid $^{31}$P-NMR measurement is 7.5% by mole or less.

Thorough a study of the present inventors, it has been found that the $P_2S_6^{4-}$ component is easily hydrolyzed. In addition, the $P_2S_6^{4-}$ component itself inhibits the ion conduction of Li ions and also acts as a factor that inhibits the crystal growth of the solid electrolyte, and thus, if a large amount of this component is contained, the crystallite diameter is possibly not sufficiently increased. Thus, when the phosphorous ratio of $P_2S_6^{4-}$ of a sulfide solid electrolyte glass ceramic is 7.5% by mole or less, the water resistance as described later and the ionic conductivity as described later are increased, and thus, this is preferable. Furthermore, the $P_2S_6^{4-}$ component possibly traps Li ions in a solid electrolyte to promote degradation of a battery, and thus, when the phosphorous ratio of the $P_2S_6^{4-}$ component in a sulfide solid electrolyte glass ceramic is 7.5% by mole or less, an increase in the oxidation characteristics when used in a battery can also be expected, and thus, this is preferable.

The $P_2S_6^{4-}$ phosphorous ratio which can be obtained by a solid $^{31}$P-NMR measurement can be determined, for example, by a method described in the section of Examples or the like.

A sulfide solid electrolyte glass ceramic according to the eighth aspect of this embodiment is the sulfide solid electrolyte glass ceramic of any one of the first to seventh aspects, in which

a ratio ($I1_{Li2S}/I_{P2S5}$) of a molar fraction of $Li_2S$ ($I1_{Li2S}$) to a molar fraction of $P_2S_5$ ($I1_{P2S5}$) calculated from the contents of the elements in raw materials is 2.60 or more and 3.30 or less.

When a sulfide solid electrolyte glass ceramic corresponds to the first aspect, and in addition, the ratio ($I1_{Li2S}/I1_{P2S5}$) of the molar fraction of $Li_2S$ ($I1_{Li2S}$) to the molar fraction of $P_2S_5$ ($I1_{P2S6}$) is within the specific range, a sulfide solid electrolyte glass ceramic having a low content of the $P_2S_6^{4-}$ component which is an impurity in a solid electrolyte is obtained, and the ionic conductivity and water resistance are increased, and thus, this is preferable. In addition, a small amount of remaining $Li_2S$ also leads to reduction in free sulfur atoms, and thus, the water resistance as described later is increased, and furthermore, the irreversible capacity when used in a battery is also suppressed, and thus, this is preferable.

The molar fraction of $Li_2S$ ($I1_{Li2S}$) and the molar fraction of $P_2S_5$ ($I1_{P2S5}$) can be determined, for example, by a method described in the section of Examples.

A sulfide solid electrolyte glass ceramic according to the nineth aspect of this embodiment is the sulfide solid electrolyte glass ceramic of any one of the first to eighth aspect, in which

a ratio ($I2_{Li2S}/I2_{P2S5}$) of a molar fraction of $Li_2S$ ($I2_{Li2S}$) to a molar fraction of $P_2S_5$ ($I2_{P2S5}$) measured with an inductively coupled plasma (ICP) emission spectrophotometer is 2.60 or more and 3.30 or less.

When the ratio ($I2_{Li2S}/I2_{P2S5}$) of the molar fraction of $Li_2S$ ($I2_{Li2S}$) to the molar fraction of $P_2S_5$ ($I2_{P2S5}$) measured with an inductively coupled plasma (ICP) emission spectrophotometer is within the specific range, a sulfide solid electrolyte glass ceramic having a low content of the $P_2S_6^{4-}$ component which is an impurity in a solid electrolyte is obtained like in the eighth aspect, and the ionic conductivity and the water resistance are increased, and thus, this is preferable. In addition, a small amount of remaining $Li_2S$ also leads to reduction in free sulfur atoms, and the water resistance as described later is increased, and furthermore, the irreversible capacity when used in a battery is also suppressed, and thus, this is preferable.

A sulfide solid electrolyte glass ceramic according to the tenth aspect of this embodiment is the sulfide solid electrolyte glass ceramic of any one of the first to nineth aspect, in which

a ratio (content ratio) of a content (mol) of the lithium atom, a content (mol) of the phosphorus atom atom, a content (mol) of the sulfur atom, and a content (mol) of the halogen atom (lithium atom : phosphorus atom atom : sulfur atom : halogen atom) is (3.20 to 3.70) : (0.70 to 1.30) : (3.00 to 5.00) : (0.20 to 0.70).

When a sulfide solid electrolyte glass ceramic corresponds to the first aspect, and in addition, contains the lithium atom, phosphorus atom, sulfur atom, and halogen atom at the specific contents, the ionic conductivity is further increased, and thus, this is preferable.

The contents of the lithium atom, phosphorus atom, sulfur atom, and halogen atom can be determined, for example, by a method described in the section of Examples.

A sulfide solid electrolyte glass ceramic according to the eleventh aspect of this embodiment is the sulfide solid electrolyte glass ceramic of any one of the first to tenth aspect, containing a thio-LISICON Region II-type crystal structure.

When a sulfide solid electrolyte glass ceramic corresponds to the first aspect, and in addition, contains a thio-LISICON Region II-type crystal structure, the ionic conductivity is further increased, and thus, this is preferable.

A method for producing a sulfide solid electrolyte glass ceramic according to the twelfth aspect of this embodiment is a method for producing a sulfide solid electrolyte glass ceramic, the method including treating lithium sulfide ($Li_2S$) and phosphorus sulfide ($P_2S_5$) by at least one selected from stirring, mixing, and pulverization to produce a solid electrolyte (A), and treating the solid electrolyte (A) and a lithium halide by at least one selected from stirring, mixing, and pulverization to produce a solid electrolyte (B).

By the twelfth aspect, the sulfide solid electrolyte glass ceramics according to the first to eleventh aspects can be obtained in a high yield.

Specifically, by the twelfth aspect, a sulfide solid electrolyte glass ceramic having an increased ionic conductivity can be produced.

In a conventional production method disclosed in PTL 1 in which a sulfide solid electrolyte is synthesized by charging all raw materials at once, a sulfide solid electrolyte glass ceramic having peaks at $2\theta=20.2°$ and $29.3°$, which has a high crystallinity and a high ionic conductivity, has not been able to be produced.

In the twelfth aspect, the step of producing the solid electrolyte (A) is referred to as a step (A), and the step of producing the solid electrolyte (B) from the solid electrolyte (A) is referred to as a step (B). By synthesizing a sulfide solid electrolyte glass ceramic through such a process divided into at least two steps, a sulfide solid electrolyte glass ceramic having peaks at $2\theta=20.2°$ and $29.3°$ which has a high crystallinity and a high conductivity was resulted.

The reason of the increase in crystallinity is considered as follows. By sufficiently reacting raw materials in synthesis in the step (A) to reduce impurities and unwanted backbones which relate to a reduction in performance, and synthesizing a solid electrolyte having a small amount of impurities by the step (B), impurities could be reduced and in the subsequent crystallization with heat, the crystallinity was increased and the conductivity was also increased.

In this embodiment, the crystallinity means a property for producing a crystallite in a sulfide solid electrolyte and/or a property in which a crystallite contained in a sulfide solid electrolyte grows to increase the size of the crystallite.

A method for producing a sulfide solid electrolyte glass ceramic according to the thirteenth aspect of this embodiment is the method for producing a sulfide solid electrolyte glass ceramic of the twelfth aspect, further including heating the solid electrolyte (A).

By performing the step (B) after heating the solid electrolyte (A) as described later, the crystallite diameter of the sulfide solid electrolyte glass ceramic is increased, and thus, this is preferable. As described above, an increase in the crystallite diameter leads to an increase in the ionic conductivity, and thus, this is preferable.

A method for producing a sulfide solid electrolyte glass ceramic according to the fourteenth aspect of this embodiment is the method for producing a sulfide solid electrolyte glass ceramic of the twelfth or thirteenth aspect, further including heating the solid electrolyte (B).

By heating the solid electrolyte (B) as described later, the crystallite diameter of a sulfide solid electrolyte glass ceramic is increased, and thus, this is preferable.

A method for producing a sulfide solid electrolyte glass ceramic according to the fifteenth aspect of this embodiment is the method for producing a sulfide solid electrolyte glass ceramic of any one of the twelfth to fourteenth aspect, in which a $P_2S_6^{4-}$ phosphorous ratio determined by a solid $^{31}$P-NMR measurement of the solid electrolyte (B) is 15.0% by mole or less.

As described above, a sulfide solid electrolyte glass ceramic contains sub-backbones of $P_2S_6^{4-}$, $P_2S_7^{4-}$, and the like in addition to $PS_4^{3-}$ which is a main backbone. $P_2S_6^{4-}$ in the solid electrolyte (B) worsens the ionic conductivity, and thus, the $P_2S_6^{4-}$ phosphorous ratio is preferably lower for increasing the ionic conductivity of a sulfide solid electrolyte glass ceramic.

The solid electrolyte (A) and the solid electrolyte (B) are intermediates in producing a sulfide solid electrolyte glass ceramic, and will be described in detail later.

Although $P_2S_6^{4-}$, $P_2S_7^{4-}$, and the like are contained also in the solid electrolyte (A), the sub-backbone is preferably present as $P_2S_7^{4-}$. It is because, by further adding $Li_2S$ according to the need as described later for the step (B), $P_2S_7^{4-}$ easily reacts with $Li_2S$ to be converted to $PS_4^{3-}$ which is a main backbone. In contrast, the rate of decomposition reaction of $P_2S_6^{4-}$ to $PS_4^{3-}$ is low, and thus, for reducing $P_2S_6^{4-}$ which worsens the ionic conductivity in the solid electrolyte (B), the $P_2S_6^{4-}$ content in the solid electrolyte (A) is preferably lower. In addition, $P_2S_6^{4-}$ also worsens the water resistance, and thus, the $P_2S_6^{4-}$ content is preferably lower.

Intensive and extensive studies in view of the above mechanism have resulted in a method for producing a sulfide solid electrolyte glass ceramic, as a method for producing a sulfide solid electrolyte glass ceramic according to the thirteenth aspect of this embodiment, in which the solid electrolyte (A) contains $Li_4P_2S_7$ and a $P_2S_7^{4-}$ phosphorous ratio in the solid electrolyte (A) measured by $^{31}$P-NMR is 20.0% by mole or more.

The $P_2S_6^{4-}$ phosphorous ratio is determined, for example, by a solid $^{31}$P-NMR measurement described in the section of Examples.

An electrode mixture material according to the sixteenth aspect of this embodiment is
an electrode mixture material containing the sulfide solid electrolyte glass ceramic according to the first to eleventh aspects and an electrode active material.

Since the sulfide solid electrolyte glass ceramic according to the first to eleventh aspects has a high ionic conductivity, an electrode mixture material produced by using the sulfide solid electrolyte glass ceramic has a superior ionic conductivity.

A lithium ion battery according to the seventeenth aspect of this embodiment is
a lithium ion battery containing at least one of the sulfide solid electrolyte glass ceramic according to the first to eleventh aspects and the electrode mixture material according to the sixteenth aspect.

Since the sulfide solid electrolyte glass ceramic and the electrode mixture material have excellent characteristics as described above, an electrode mixture material produced by using the sulfide solid electrolyte glass ceramic and the electrode mixture material has excellent battery characteristics.

Hereinunder, the sulfide solid electrolyte glass ceramic, the method for producing a sulfide solid electrolyte glass ceramic, the electrode mixture material, and the lithium ion battery of this embodiment will be described in more detail along the aspects of implement.

[Sulfide solid electrolyte glass ceramic]

The sulfide solid electrolyte glass ceramic of this embodiment is required to contain a lithium atom, a sulfur atom, a phosphorus atom, and a halogen atom, have peaks at 20.2° and 29.3° in an X-ray diffraction (XRD) measurement using CuKα line, the intensity ratio ($P_A/P_B$) of the peak intensity ($P_A$) of the peak appearing at $2\theta=20.2°$ to the peak intensity ($P_B$) of the peak appearing at $2\theta=29.3°$ being more than 1.0, and have a crystallite diameter of 30 nm or more.

When $P_A/P_B$ is 1.0 or less, a desired ionic conductivity cannot be achieved. Also when the crystallite diameter is less than 30 nm, a desired ionic conductivity cannot be achieved.

The sulfide solid electrolyte glass ceramic of this embodiment is preferably obtained by heating as described later an amorphous sulfide solid electrolyte.

In the present description, the "sulfide solid electrolyte" is an electrolyte that maintains a solid state at 25°C in nitrogen atmosphere, and is a sulfide solid electrolyte containing a lithium atom, a sulfur atom, a phosphorus atom, and a halogen atom, and having an ionic conductivity due to the lithium atom.

The "sulfide solid electrolyte" includes both of a crystalline sulfide solid electrolyte having a crystal structure and an amorphous sulfide solid electrolyte. In the present description, the crystalline sulfide solid electrolyte is a sulfide solid electrolyte having observed in an X-ray diffraction pattern in X-ray diffractometry a peak derived from a sulfide solid electrolyte regardless of presence or absence of a peak derived from a raw material of the sulfide solid electrolyte therein. In other words, the crystalline sulfide solid electrolyte contains a crystal structure derived from a sulfide solid electrolyte, and a part thereof may have a crystal structure derived from the sulfide solid electrolyte or the whole thereof may have a crystal structure derived from the sulfide solid electrolyte. The crystalline sulfide solid electrolyte may contain an amorphous sulfide solid electrolyte as a part thereof as long as it has such an X-ray diffraction pattern as above, and does not have to contain an amorphous sulfide solid electrolyte. It is rather preferred that an amorphous component is contained due to easy processing into a battery. Accordingly, the crystalline sulfide solid electrolyte encompasses a so-called glass ceramic which is obtained by heating an amorphous sulfide solid electrolyte to the crystallization temperature or higher

The sulfide solid electrolyte glass ceramic of this embodiment is a crystalline sulfide solid electrolyte which may contain an amorphous component.

In the present description, the amorphous sulfide solid electrolyte means one having a halo pattern in which substantially no peak is observed in an X-ray diffraction pattern in an X-ray diffractometry regardless of the presence or absence of a peak derived from a raw material of the sulfide solid electrolyte and the presence or absence of a minute crystal which is inevitably produced in an operation for isolating an amorphous sulfide solid electrolyte.

A sulfide solid electrolyte glass ceramic means a sulfide solid electrolyte in which a peak of a crystal structure derived from a sulfide solid electrolyte and a halo pattern derived from an amorphous sulfide solid electrolyte are observed in an X-ray diffraction pattern in X-ray diffractometry.

The sulfide solid electrolyte glass ceramic of this embodiment has peaks at a diffraction angles ($2\theta$) of 20.2° and 29.3° in X-ray diffractometry using CuKα line, and preferably further has a peak at $2\theta=23.6°$.

In the sulfide solid electrolyte glass ceramic of this embodiment, peaks also appear around $2\theta=17.5°$, $18.3°$, $26.1°$, $27.3°$, and $30.0°$ besides the above peaks. However, it could be found that the correlation between the peak intensities of the peaks appearing at $20.2°$ and $29.3°$ and the ionic conductivity is especially high.

The peak positions by an X-ray diffraction (XRD) measurement using CuK$\alpha$ line and the crystallite diameter can be determined, for example, by a method described in the section of Examples.

The peak intensity is the height of the peak top from the base line (diffraction intensity) in an X-ray diffraction pattern of an XRD measurement, and can be determined by a method described in the section of Examples. The peak position and analyzed intensity can be determined from the height at $2\theta$ of the peak top.

$<P_A/P_B>$

The sulfide solid electrolyte glass ceramic of this embodiment contains a halogen atom in the structure thereof. It has been found that, in the crystal structure thereof, the peak intensity ($P_A$) of the peak appearing at $2\theta=20.2°$ and the peak intensity ($P_B$) of the peak appearing at $2\theta=29.3°$ vary depending on the type and amount of the halogen. It has been found that a lower $P_B$ leads to a higher ionic conductivity. However, the peak intensities also change according to the measurement conditions and the like. The present inventors focused on the value of the intensity ratio ($P_A/P_B$). They have found that the intensity ratio is less affected by the difference in the measurement conditions and the like, a sulfide solid electrolyte glass ceramic having $P_A/P_B$ of more than 1.0 has a high lithium ion transport number and thus has a high ionic conductivity. The crystal structure characterized by $2\theta=20.2°$ appears in a composition having a large amount of iodine, which gives a high crystallinity and also gives a high ionic conductivity in the production method of this patent application. On the other hand, the crystal structure characterized by $2\theta=29.3°$ appears in a composition having a large amount of bromine, which gives a large half-value width of the peak and a low crystallinity. When this phase increases, the crystallinity of the crystal of $2\theta=20.2°$ decreases. It is assumed that, with the change in the ratio of the halogens contained, the ratio of the two crystals changes, and when $P_A/P_B$ is more than 1.0, the proportion of the $2\theta=20.2°$ crystal phase which is highly conductive increases and the crystallinity also increases, resulting in an increased ionic conductivity.

When $P_A/P_B$ is 1.0 or less, a desired ionic conductivity cannot be achieved.

For increasing the ionic conductivity, the lower limit of $P_A/P_B$ is preferably 1.1 or more, and further preferably 1.5 or more. Since a higher $P_A/P_B$ is more preferable, the upper limit is not particularly limited, but in a sulfide solid electrolyte glass ceramic that can be produced, the $P_A/P_B$ value is generally 20.0 or less.

$P_A/P_B$ can be calculated, for example, by a method described in the section of Examples.

$(I_A/I_B)$

For increasing the ionic conductivity, the sulfide solid electrolyte glass ceramic of this embodiment preferably has an intensity ratio ($I_A/I_B$) of the peak area intensity ($I_A$) of the peak appearing at $2\theta=20.2°$ to the peak area intensity ($I_B$) of the peak appearing at $2\theta=29.3°$ of preferably 0.78 or more, more preferably 0.85 or more, further preferably 0.93 or more. The upper limit is not particularly limited, but in a sulfide solid electrolyte glass ceramic that can be produced, the intensity ratio ($I_A/I_B$) is generally 10.0 or less.

$I_A/I_B$ can be calculated, for example, by a method described in the section of Examples.

The sulfide solid electrolyte glass ceramic of this embodiment contains, as a main crystal, a crystal structure that has peaks at around $2\theta=20.2°$ and around $2\theta=29.3°$, and may contain, as other crystal structures, an $Li_3PS_4$ crystal structure, an $Li_4P_2S_6$ crystal structure, an $Li_7PS_6$ crystal structure, an $Li_7P_3S_{11}$ crystal structure, an $Li_7P_2S_8X$ crystal structure, an $Li_4PS_4X$ crystal structure, and the like (X is a halogen element).

Here, the "around" means including a measurement error and a variation in the measurement value due to the measurement apparatus, and means a range of $\pm0.5°$. Specifically, $2\theta=20.2°$ means $19.7°$ or higher and $20.7°$ or lower.

The sulfide solid electrolyte glass ceramic of this embodiment preferably contains a thio-LISICON Region II-type crystal structure in that a higher ionic conductivity can be achieved. Here, the "thio-LISICON Region II-type crystal structure" expresses any one of an $Li_{4-x}Ge_{1-x}P_xS_4$-based thio-LISICON Region II-type crystal structure and a crystal structure similar to the $Li_{4-x}Ge_{1-x}P_xS_4$-based thio-LISICON Region II-type. In addition, the sulfide solid electrolyte glass ceramic of this embodiment may be any one that has the thio-LISICON Region II-type crystal structure, and from the viewpoint of achieving a higher ionic conductivity, the sulfide solid electrolyte glass ceramic preferably has the thio-LISICON Region II-type crystal structure as a main crystal. In the present description, the phrase "having as a main crystal" means that the percentage of the subject crystal structure in the crystal structure is 80% or more, preferably 90% or more, and more preferably 95% or more. In addition, the sulfide solid electrolyte glass ceramic of this embodiment preferably contains no crystalline $Li_3PS_4$ ($\beta$-$Li_3PS_4$) from the viewpoint of achieving a higher ionic conductivity.

In X-ray diffractometry using CuK$\alpha$ line, the diffraction peaks of the $Li_3PS_4$ crystal structure appear, for example, at around $2\theta=17.5°$, $18.3°$, $26.1°$, $27.3°$, and $30.0°$, the diffraction peaks of the $Li_4P_2S_6$ crystal structure appear, for example, at around $2\theta=16.9°$, $27.1°$, and $32.5°$, the diffraction peaks of the $Li_7PS_6$ crystal structure appear, for example, at

around $2\theta=15.3°$, $25.2°$, $29.6°$, and $31.0°$, the diffraction peaks of the $Li_7P_3S_{11}$ crystal structure appear, for example, at around $2\theta=17.8°$, $18.5°$, $19.7°$, $21.8°$, $23.7°$, $25.9°$, $29.6°$, and $30.0°$, the diffraction peaks of the $Li_{4-x}Ge_{1-x}P_xS_4$-based thio-LISICON Region II-type crystal structure appear, for example, at around $2\theta=20.1°$, $23.9°$, and $29.5°$, and the diffraction peaks of a crystal structure similar to the $Li_{4-x}Ge_{1-x}P_xS_4$-based thio-LISICON Region II-type appear, for example, at around $2\theta=20.2$ and $23.6°$. Note that the peak positions may vary within a range of $\pm0.5°$.

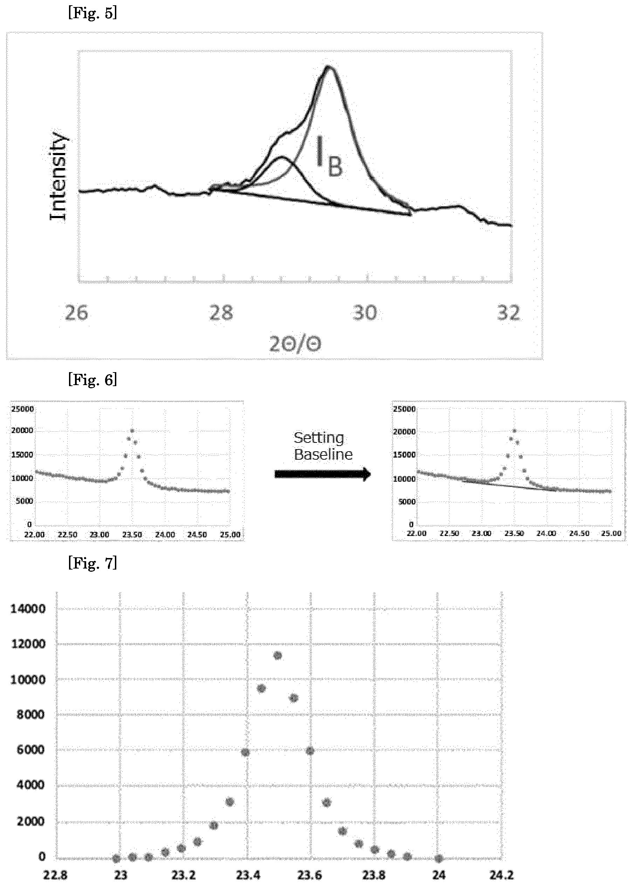

As described above, the sulfide solid electrolyte glass ceramic of this embodiment preferably contains no crystalline $Li_3PS_4$ ($\beta$-$Li_3PS_4$). Fig. 7 shows an example of X-ray diffractometry of the sulfide solid electrolyte glass ceramic of this embodiment. The sulfide solid electrolyte glass ceramic of this embodiment has no diffraction peak at $2\theta=17.5°$ and $26.1°$ which are seen in crystalline $Li_3PS_4$, or if having any peak, a peak quite lower than the diffraction peaks of the thio-LISICON Region II-type crystal structure is barely detected.

The crystal structures having the $Li_7PS_6$ structural backbone and represented by compositional formulae $Li_{7-x}P_{1-y}Si_yS_6$ and $Li_{7+x}P_{1-y}Si_yS_6$ (x is -0.6 to 0.6, y is 0.1 to 0.6) in which P is partially substituted with Si, are a cubic crystal or an orthorhombic crystal, preferably a cubic crystal, and mainly have peaks appearing at positions of $2\theta=15.5°$, $18.0°$, $25.0°$, $30.0°$, $31.4°$, $45.3°$, $47.0°$, and $52.0°$ in the X-ray diffractometry using a $CuK\alpha$ line. The crystal structure represented by the compositional formula $Li_{7-x-2y}PS_{6-x-y}Cl_x$ ($0.8\leq x\leq1.7$, $0<y\leq-0.25x+0.5$) is preferably a cubic crystal, and mainly has peaks appearing at positions of $2\theta = 15.5°$, $18.0°$, $25.0°$, $30.0°$, $31.4°$, $45.3°$, $47.0°$, and $52.0°$ in the X-ray diffractometry using a $CuK\alpha$ line. The crystal structure represented by the compositional formula $Li_{7-x}PS_{6-x}Ha_x$ (Ha is Cl or Br, x is preferably 0.2 to 1.8) is preferably a cubic crystal, and mainly has peaks appearing at positions of $2\theta = 15.5°$, $18.0°$, $25.0°$, $30.0°$, $31.4°$, $45.3°$, $47.0°$, and $52.0°$ in the X-ray diffractometry using a $CuK\alpha$ line.

(Crystallite diameter)

The crystallite diameter of the sulfide solid electrolyte glass ceramic of this embodiment is required to be 30 nm or more. It is because a high ionic conductivity cannot be achieved as described above. From the viewpoint of increasing the ionic conductivity and water resistance, the crystallite diameter is preferably 32 nm or more, more preferably 33 nm or more, further preferably 35 nm or more, furthermore preferably 40 nm or more, more prominently preferably 70 nm or more, and further prominently preferably 76 nm or more. As described later, by crystallization after the step (A), the crystallite diameter of the sulfide solid electrolyte glass ceramic can be further increased. In such a case, the crystallite diameter is particularly preferably 90 nm or more.

The upper limit is not particularly limited, but due to easy production, availability, and easy production of a battery and the like, the crystallite diameter is preferably 300 nm or less, more preferably 250 nm or less, further preferably 200 nm or less, furthermore preferably 180 nm or less, and more prominently preferably 160 nm or less.

The sulfide solid electrolyte glass ceramic of this embodiment contains a lithium atom, a phosphorus atom, a sulfur atom, and a halogen atom, and the halogen atom is preferably at least one selected from a chlorine atom, a bromine atom, and an iodine atom.

When only one kind is contained as the halogen atom, the halogen atom is preferably a bromine atom or an iodine atom, and further preferably an iodine atom.

When the halogen atom contains two kinds, a combination of a chlorine atom and a bromine atom, a combination of a chlorine atom and a bromine atom, or a combination of a bromine atom and an iodine atom is preferred, and a combination of a bromine atom and an iodine atom is further preferred.

The ionic conductivity is thus increased, and thus, this is preferable. When the sulfide solid electrolyte glass ceramic contains an iodine atom, the water resistance is increased, and thus, this is preferable.

The sulfide solid electrolyte glass ceramic of this embodiment preferably contains at least an iodine atom, and preferably further contains a bromine atom since the ionic conductivity and water resistance are then increased.

($M_{Br}/M_I$)

When the content of the bromine atom ($M_{Br}$ mol) and the content of the iodine atom ($M_I$ mol) in the sulfide solid electrolyte glass ceramic satisfy the relation of $M_{Br}/M_I\leq1.00$, the ionic conductivity can be increased, and thus, this is preferable.

$M_{Br}$ depends on the total number of moles of the bromine atom contained in the raw materials used in producing the sulfide solid electrolyte glass ceramic, and $M_I$ depends on the total number of moles of the iodine atom contained in the raw materials used in producing the sulfide solid electrolyte glass ceramic. It has been found that the ionic conductivity is largely varied by adjusting $M_{Br}/M_I$ and that a decrease in $M_{Br}/M_I$ leads to an increase in $P_A/P_B$. A lower $M_{Br}/M_I$ leads to a higher crystallinity and a larger crystallite diameter, resulting in a higher ionic conductivity, and thus, this is preferable. With a further increase in the crystallinity, the water resistance as described later is increased, and thus, this is preferable. Thus, $M_{Br}/M_I$ is preferably 0.80 or less, further preferably 0.50 or less, and furthermore preferably 0.40 or less.

$M_{Br}/M_I$ is preferably smaller for increasing the ionic conductivity. When the sulfide solid electrolyte glass ceramic contains a small amount of bromine atoms, there are bromine atoms which are smaller than iodine atoms in the crystal, and thus, a topical strain is generated in the crystal structure, which causes a phenomenon that the possibility of conductivity is increased partially in the ion conductive route, and thus, this is preferable. Thus, $M_{Br}/M_I$ is preferably 0 or more, more preferably more than 0, further preferably 0.05 or more, and furthermore preferably 0.08 or more.

$M_{Br}$ and $M_I$ can be calculated from the contents of the respective elements in the raw materials.

The sulfide solid electrolyte glass ceramic of this embodiment preferably has a $P_2S_6^{4-}$ phosphorous ratio determined by a solid $^{31}P$-NMR measurement of 7.5% by mole or less. As described above, $P_2S_6^{4-}$ is easily hydrolyzed, and when the $P_2S_6^{4-}$ phosphorous ratio is small, the water resistance is increased, and thus, this is preferable. For increasing the ionic conductivity and water resistance, the $P_2S_6^{4-}$ phosphorous ratio is preferably 5.5% by mole or less, more preferably 4.0% by mole or less, further preferably 2.0% by mole or less, furthermore preferably 1.5% by mole or less, more prominently preferably 1.0% by mole or less, and further prominently preferably 0.8% by mole or less. A lower $P_2S_6^{4-}$ phosphorous ratio is preferred, and the lower limit is not particularly limited, and is any value as long as it is substantially 0% by mole or more. The "substantially" means that the "0% by mole" encompasses a detection limit or lower.

In the sulfide solid electrolyte glass ceramic of this embodiment, a lower $P_2S_7^{4-}$ phosphorous ratio is preferred in point of the ionic conductivity of the sulfide solid electrolyte, and the $P_2S_7^{4-}$ phosphorous ratio is preferably 20.0% or less, more preferably 10.0% or less, further preferably 8.0% or less, and the lower limit is preferably closer to 0%.

In the present description, the "main backbone" means that the phosphorous ratio of the $PS_4^{3-}$ unit ($PS_4^{3-}$ phosphorous ratio) is more than 50.0%, and from the viewpoint of increasing the ionic conductivity of the sulfide solid electrolyte, the $PS_4^{3-}$ phosphorous ratio is preferably 60.0% or more, more preferably 70.0% or more, further preferably 80.0% or more, and the upper limit is not particularly limited and is preferably closer to 100%.

In the present description, the proportion of the $PS_4^{3-}$ unit ($PS_4^{3-}$ phosphorous ratio), the proportion of the $P_2S_7^{4-}$ unit ($P_2S_7^{4-}$ phosphorous ratio), and the proportion of the $P_2S_6^{4-}$ unit ($P_2S_6^{4-}$ phosphorous ratio) mean the respective proportions of the peak areas of the $PS_4^{3-}$ unit, the $P_2S_7^{4-}$ unit, and the $P_2S_6^{4-}$ unit to the total peak area obtained by measuring a $^{31}P$ MAS NMR spectrum (solid $^{31}P$ NMR spectrum), followed by waveform separation. The detailed conditions of the measurement of solid $^{31}P$ NMR spectrum are not particularly limited, but, for example, the solid $^{31}P$ NMR spectrum may be measured based on the conditions described in the section of Examples.

($I1_{Li2S}/I1_{P2S5}$)

The sulfide solid electrolyte glass ceramic of this embodiment preferably has a ratio ($I1_{Li2S}/I1_{P2S5}$) of the molar fraction of $Li_2S$ ($I1_{Li2S}$) to the molar fraction of $P_2S_5$ ($I1_{P2S5}$) calculated from the contents of the elements in the raw materials of 2.60 or more and 3.30 or less since the ionic conductivity and water resistance are then increased. From the viewpoint of increasing the ionic conductivity and water resistance, the ratio ($I1_{Li2S}/I1_{P2S5}$) is more preferably 2.70 or more and 3.20 or less, and further preferably 2.90 or more and 3.10 or less.

($I2_{Li2S}/I2_{P2S5}$)

The sulfide solid electrolyte glass ceramic of this embodiment preferably has a ratio ($I2_{Li2S}/I2_{P2S5}$) of the molar fraction of $Li_2S$ ($I2_{Li2S}$) to the molar fraction of $P_2S_5$ ($I2_{P2S5}$) by the composition determined using an inductively coupled plasma (ICP) emission spectrophotometer described later of 2.60 or more and 3.30 or less since the ionic conductivity and water resistance are then increased. From the viewpoint of increasing the ionic conductivity and water resistance, the ratio ($I2_{Li2S}/I2_{P2S5}$) is more preferably 2.70 or more and 3.20 or less, and further preferably 2.90 or more and 3.10 or less.

As is seen from the results in Examples described later, the difference between the ratio ($I1_{Li2S}/I1_{P2S5}$) based on the raw materials and the ratio ($I2_{Li2S}/I2_{P2S5}$) based on measurement values by an inductively coupled plasma (ICP) emission spectrophotometer is 10% or less, further 9.5% or less, 7.5% or less, 5% or less, 3% or less, 1.5% or less, and 1% or less, and thus they are generally equal. Thus, it is found that, according to the production method of this embodiment as described later, a sulfide solid electrolyte glass ceramic having a high ionic conductivity can be obtained while effectively utilizing lithium sulfide ($Li_2S$) and phosphorus sulfide ($P_2S_5$), and furthermore, solid electrolytes (A) and (B) obtained from raw materials containing lithium sulfide ($Li_2S$) and phosphorus sulfide ($P_2S_5$).

When the sulfide solid electrolyte glass ceramic of this embodiment preferably has a ratio (content ratio) of the content (mol) of the lithium atom, the content (mol) of the phosphorus atom atom, the content (mol) of the sulfur atom, and the content (mol) of the halogen atom (lithium atom : phosphorus atom atom : sulfur atom : halogen atom) of (3.20 to 3.70) : (0.70 to 1.30) : (3.00 to 5.00) : (0.20 to 0.70) since the sulfide solid electrolyte glass ceramic is then likely to have the thio-LISICON Region II-type crystal structure, more preferably (3.30 to 3.60) : (0.80 to 1.20) : (3.50 to 4.50) : (0.30 to 0.60), further preferably (3.40 to 3.55) : (0.90 to 1.10) : (3.70 to 4.30) : (0.40 to 0.55).

The contents can be calculated from the contents of the respective elements in the raw materials.

The shape of the sulfide solid electrolyte glass ceramic of this embodiment is not particularly limited, but an example is a particle form. The average particle size ($D_{50}$) of the sulfide solid electrolyte glass ceramic of this embodiment of a particle form is, for example, in the range of 0.01 $\mu$m to 500 $\mu$m, or 0.1 to 200 $\mu$m.

The average particle size ($D_{50}$) can be measured, for example, using a laser diffraction/scattering particle size distribution analyzer (for example, LA-950V2 model LA-950W2 manufactured by HORIBA).

(Ionic conductivity)

The sulfide solid electrolyte glass ceramic of this embodiment produced by the production method of this embodiment has a very high ionic conductivity due to its high $PS_4^{3-}$ phosphorous ratio, and the ionic conductivity can be generally 0.01 mS/cm or more. The ionic conductivity is more preferably 5.0 mS/cm or more, further preferably 5.4 mS/cm or more, furthermore preferably 5.8 mS/cm or more, prominently preferably 6.0 mS/cm or more, more prominently preferably 6.8 mS/cm or more, and particularly preferably 7.2 mS/cm or more.

Water resistance (amount of $H_2S$ generated)

The sulfide solid electrolyte glass ceramic of this embodiment is superior in the water resistance as described above while showing a high ionic conductivity, and thus, this is preferable.

The sulfide solid electrolyte sometimes generates hydrogen sulfide ($H_2S$), for example, for the reason that a hydrolyzation reaction is promoted by the contact with water, such as moisture in the air. The "water resistance" means such a property that generation of $H_2S$ is suppressed even with the contact with the moisture in the air and the like.

A lower amount of $H_2S$ generated is preferred. When the amount of $H_2S$ generated, which is determined by a method described in the section of Examples, is less than 2.0 cc/g, there is substantially no problem. The amount of $H_2S$ generated is more preferably 1.5 cc/g or less, further preferably 1.0 cc/g or less, furthermore preferably 0.8 cc/g or less, and prominently preferably 0.5 cc/g or less. The lower limit is not particularly limited.

The production method of this embodiment will be described in more detail below along the aforementioned aspects of implement.

[Method for producing sulfide solid electrolyte glass ceramic]

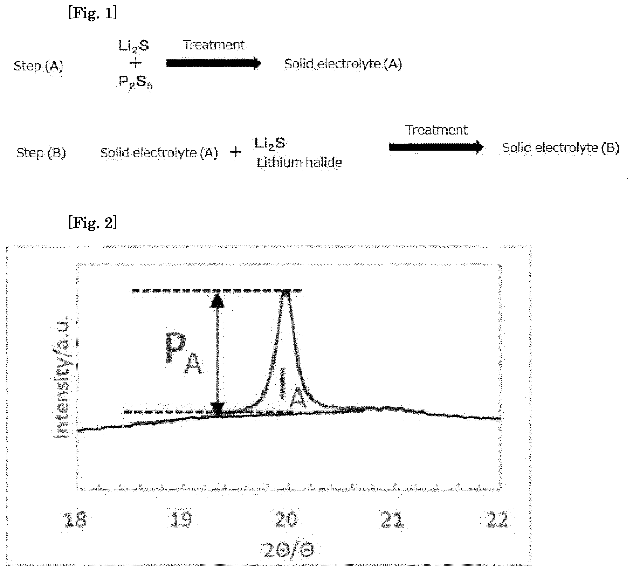

The method for producing a sulfide solid electrolyte glass ceramic of this embodiment is required to be, as shown in Fig. 1, a method for producing a sulfide solid electrolyte glass ceramic, the method including

treating lithium sulfide ($Li_2S$) and phosphorus sulfide ($P_2S_5$) by at least one selected from stirring, mixing, and pulverization to produce a solid electrolyte (A), and

treating the solid electrolyte (A) and a lithium halide by at least one selected from stirring, mixing, and pulverization to produce a solid electrolyte (B).

By the production method of this embodiment, a sulfide solid electrolyte glass ceramic having a high ionic conductivity can be produced by an easy production method, and furthermore, the produced sulfide solid electrolyte glass ceramic has a high water resistance and a lithium ion battery produced by using the sulfide solid electrolyte glass ceramic has excellent battery characteristics, and thus, this is preferable.

<Step (A)>

The method for producing a sulfide solid electrolyte glass ceramic of this embodiment is required to include treating lithium sulfide ($Li_2S$) and phosphorus sulfide ($P_2S_5$) by at least one selected from stirring, mixing, and pulverization to produce a solid electrolyte (A) (sometimes referred to as a step (A)), and furthermore, the solid electrolyte (A) is more preferably crystallized with heat.

The method for producing a sulfide solid electrolyte glass ceramic of this embodiment produces the solid electrolyte (A) unlike the production method disclosed in PTL 1. Due to the process via the solid electrolyte (A) as described above, the phosphorous ratio of $P_2S_6^{4-}$ which is an impurity in a solid electrolyte can be reduced, and the phosphorous ratio of $P_2S_6^{4-}$ can be further reduced by heating the solid electrolyte (A) as needed, making it possible to achieve production of a solid electrolyte (B) having an increased crystallinity. This step may be achieved in any method that can reduce the $P_2S_6^{4-}$ phosphorus ratio, and the method is not particularly limited.

<Step (B)>

The method for producing a sulfide solid electrolyte glass ceramic of this embodiment is required to include treating the solid electrolyte (A) and a lithium halide by at least one selected from stirring, mixing, and pulverization to produce a solid electrolyte (B) (sometimes referred to as step (B)).

The step (B) of this embodiment is required to include treating the solid electrolyte (A) obtained in the step (A) and a lithium halide, and $Li_2S$ as needed, by at least one selected from stirring, mixing, and pulverization which are described later to produce a solid electrolyte (B).

The step (B) may be performed in a manner that the solid electrolyte (A) is taken after completion of the step (A) and a lithium halide is added to the obtained solid electrolyte (A), followed by treatment, or may be performed in a manner that a lithium halide is added after completion of the step (A), followed by treatment. From the viewpoint that the production step is not cumbersome, it is preferred that, after completion of the step (A), a lithium halide is added into a treatment apparatus in which the step (A) is performed, followed by treatment. When $Li_2S$ is used, $Li_2S$ is preferably added at the same time with or before or after the addition of a lithium halide.

As the lithium halide, at least lithium iodide (LiI) is preferably contained, and lithium bromide (LiBr) is preferably further contained.

<Treatment>

The treatments of the step (A) and the step (B) of this embodiment are required to include at least one selected from stirring, mixing, and pulverization. Any one of stirring, mixing, and pulverization may be conducted alone or stirring, mixing, and pulverization may be conducted in combination, but pulverization is preferred from the viewpoint of making the particle size of the sulfide solid electrolyte within the range as described later.

The treatments of the step (A) and the step (B) may be the same or different, but is preferably the same. From the viewpoint that the production process is not cumbersome, the treatments are more preferably conducted continuously with the same treatment apparatus.

The treatments of this embodiment can be conducted by using a mixer, a stirrer, a pulverizer, or the like. This is because mixing of raw materials can be achieved using a stirrer, and pulverization of raw materials is achieved with a pulverizer and mixing is caused at the same time.

An example of the stirrer and mixer is a mechanically stirring-style mixer in which a stirring blade is provided in a reaction tank for stirring (mixing by stirring, which can be also referred to as stirring-mixing). Examples of the mechanically stirring-style mixer include a high-speed stirring-type mixer and a double arm-type mixer. Examples of the high-speed stirring-type mixer include a vertical axis rotation-type mixer and a horizontal axis rotation-type mixer, and a mixer of either type may be used.

Examples of the shape of the stirring blade used in the mechanically stirring-style mixer include a blade shape, an arm shape, an anchor shape, a paddle shape, a full-zone shape, a ribbon shape, a multistep blade shape, a double arm shape, a shovel shape, a twin-shaft blade shape, a flat blade shape, and a C-type blade shape. From the viewpoint of more efficiently promoting a reaction of raw materials, a shovel shape, a flat blade shape, a C-type blade shape, an anchor shape, a paddle shape, and a full-zone shape are preferred, and an anchor shape, a paddle shape, and a full-zone shape are more preferred.

When a mechanically stirring-style mixer is used, the rotation number of the stirring blade can be appropriately controlled with no specific limitation according to the volume and the temperature of a fluid in the reaction tank, the shape of the stirring blade, and the like, and can be generally approximately 5 rpm or more and 400 rpm or less, and from the viewpoint of more efficiently promoting the reaction of raw materials, the rotation number is preferably 10 rpm or more and 300 rpm or less, more preferably 15 rpm or more and 250 rpm or less, and further preferably 20 rpm or more and 200 rpm or less.

The temperature condition in mixing with a mixer is not particularly limited, and, for example, is generally -30 to 120°C, preferably -10 to 100°C, more preferably 0 to 80°C, and further preferably 10 to 60°C. The time for mixing is generally 0.1 to 500 hours, and from the viewpoints of making the dispersion state of raw materials uniform to promote the reaction, is preferably 1 to 450 hours, more preferably 10 to 425 hours, further preferably 20 to 400 hours, and furthermore preferably 30 to 375 hours.

A method for performing mixing accompanied with pulverization with a pulverizer is a method that has been conventionally adopted as a mechanical milling method. As a pulverizer, for example, a media-style pulverizer with pulverization media can be used.

Medium-style pulverizer is roughly divided into vessel driving-style pulverizer and media stirring-style pulverizer. Examples of the vessel driving-style pulverizer include a ball mill, a bead mill, and the like which include a stirring tank, a pulverizing tank, or a combination thereof. Examples of the media stirring-style pulverizer include various pulverizers, for example, impact-style pulverizers, such as a cutter mill, a hummer mill, and a pin mill; a tower-type pulverizer, such as a tower mill; stirring tank-type pulverizers, such as an attritor, an aquamizer, and a sand grinder; flow tank-type pulverizers, such as a viscomill and a pearl mill; a flow tube-type pulverizer; an anullar-type pulverizer, such as a coball mill; a continuous dynamic-type pulverizer; and a single screw or multi-screw kneader. Among them, in view of easy adjustment of the particle size of the resulting sulfide, a ball mill or a bead mill exemplified as a vessel driving-style pulverizer is preferred.

The pulverizer can be appropriately selected according to the desired scale and the like. In the case of a relatively small scale, a vessel driving-style pulverizer, such as a ball mill or a bead mill, can be used, and in the case of a large scall or mass production, a pulverizer of another style may be used.

As described later, when it is in a liquid state or a slurry state containing a liquid, such as a solvent, in mixing, a wet pulverizer which can be adapted to wet pulverization is preferably used.

Typical examples of the wet pulverizer include a wet bead mill, a wet ball mill, and a wet vibration mill, and in points of capability of freely adjusting conditions of pulverization operation and being easily adapted to a small particle size, a wet bead mill which uses beads as pulverization media is preferred. A dry pulverizer, for example, a dry media-style pulverizer, such as a dry bead mill, a dry ball mill, a dry planetary ball mill, or a dry vibration mill, or a dry non-media pulverizer, such as a jet mill, can also be used.

When the object to be mixed is in a liquid state or a slurry state, a flow-style pulverizer in which a circulation operation can be adopted as required can also be used. A specific example is a pulverizer having a form in which the object is circulated between a pulverizer (pulverization mixer) that pulverizes a slurry and a temperature keeping tank (reaction vessel).

The size of beads or balls used in the ball mill or bead mill may be appropriately selected according to the desired particle size and the amount of the object treated, and, for example, the diameter of the beads is generally 0.05 mmφ or more, preferably 0.1 mmφ or more, and more preferably 0.3 mmφ or more, and the upper limit is generally 5.0 mmφ or less, preferably 3.0 mmφ or less, and more preferably 2.0 mmφ or less. The diameter of the balls is generally 2.0 mmφ or more, preferably 2.5 mmφ or more, and more preferably 3.0 mmφ or more, and the upper limit is generally 30.0 mmφ or less, preferably 20.0 mmφ or less, and more preferably 15.0 mmφ or less.

Examples of the material include metals, such as stainless steel, chromium steel, and tungsten carbide; a ceramic, such as zirconia and silicon nitride; and a mineral, such as agate.

When a ball mill or a bead mill is used, the rotation number cannot be completely defined because it depends on the scale of the treatment, but is generally 10 rpm or more, preferably 20 rpm or more, and more preferably 50 rpm or more, and the upper limit is generally 1,000 rpm or less, preferably 900 rpm or less, more preferably 800 rpm or less, and further preferably 700 rpm or less.

The time for pulverization in this case cannot be completely defined because it depends on the scale of the treatment, but is generally 5 hours or more, preferably 10 hours or more, more preferably 20 hours or more, and further preferably 30 hours or more, and the upper limit is generally 300 hours or less, preferably 200 hours or less, and more preferably 100 hours or less.

By selecting the size and material of the media (beads, balls) used and the rotation number of a rotor, the time, and the like, a treatment of mixing, stirring, pulverization, or a combination thereof can be performed, and the particle size and the like of the resulting sulfide can be adjusted.

(Solvent)

In the mixing as described above, a solvent can be added to the raw materials before mixing. As the solvent, a variety of solvents that are widely referred to as organic solvents can be used.

As the solvent, a wide variety of solvents that have heretofore been used in producing a solid electrolyte can be adopted, and examples thereof include hydrocarbon solvents, such as an aliphatic hydrocarbon solvent, an alicyclic hydrocarbon solvent, and an aromatic hydrocarbon solvent.

Examples of the aliphatic hydrocarbon include hexane, pentane, 2-ethylhexane, heptane, octane, decane, undecane, dodecane, and tridecane. Examples of the alicyclic hydrocarbon include cyclohexane and methylcyclohexane. Examples of the aromatic hydrocarbon solvent include benzene, toluene, xylene, mesitylene, ethylbenzene, tert-butylbenzene, trifluoromethylbenzene, and nitrobenzene.

Besides the hydrocarbon solvents, solvents containing an element other than carbon element and hydrogen element, for example, a hetero element, such as nitrogen element, oxygen element, sulfur element, or a halogen element, are exemplified. Preferred examples of such solvents include an ether solvent, an ester solvent, an alcohol solvent, an aldehyde solvent, and a ketone solvent which contain oxygen element as the hetero element.

Examples of the ether solvent include aliphatic ethers, such as dimethyl ether, diethyl ether, tert-butyl methyl ether, dimethoxymethane, dimethoxyethane, diethylene glycol dimethyl ether (Digyme), triethylene oxide glycol dimethyl ether (Triglyme), diethylene glycol, and triethylene glycol; alicyclic ethers, such as ethylene oxide, propylene oxide, tetrahydrofuran, tetrahydropyran, dimethoxytetrahydrofuran, cyclopentyl methyl ether, and dioxane; heterocyclic ethers, such as furan, benzofuran, and benzopyran; and aromatic ethers, such as methyl phenyl ether (anisole), ethyl phenyl ether, dibenzyl ether, and diphenyl ether.

Preferred examples of the ester solvent include aliphatic esters, such as methyl formate, ethyl formate, methyl acetate, ethyl acetate, propyl acetate, isopropyl acetate; methyl propionate, ethyl propionate, dimethyl oxalate, diethyl oxalate, dimethyl malonate, diethyl malonate, dimethyl succinate, and diethyl succinate; alicyclic esters, such as methyl cyclohexanecarboxylate, ethyl cyclohexanecarboxylate, and dimethyl cyclohexanedicarboxylate; heterocyclic esters, such as methyl pyridinecarboxylate, methyl pyrimidinecarboxylate, acetolactone, propiolactone, butyrolactone, and valerolactone; and aromatic esters, such as methyl benzoate, ethyl benzoate, dimethyl phthalate, diethyl phthalate, butylbenzyl phthalate, dicyclohexyl phthalate, trimethyl trimellitate, and triethyl trimellitate.

In addition, alcohol solvents, such as ethanol and butanol; aldehyde solvents, such as formaldehyde, acetaldehyde, and dimethylformamide; ketone solvents, such as acetone and methyl ethyl ketone, are preferably exemplified.

Examples of the solvent containing nitrogen element as the hetero element include solvents having a group containing nitrogen element, such as an amino group, an amide group, a nitro group, or a nitrile group. Such a solvent can be used also as a complexing agent for complexing the solid electrolyte.

Examples of the solvent having an amino group include aliphatic amines, such as ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); alicyclic amines, such as cyclopropanediamine, cyclohexanediamine, and bisaminomethylcyclohexane; heterocyclic amines, such as isophoronediamine, piperazine, dipiperidylpropane, and dimethylpiperazine; aromatic amines, such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Solvents containing nitrogen element, such as dimethylformamide, acetonitrile, acrylonitrile, and nitrobenzene are also preferably exemplified.

Examples of the solvent containing a halogen element as the hetero element include dichloromethane, chlorobenzene, trifluoromethylbenzene, chlorobenzene, chlorotoluene, and bromobenzene.

Preferred examples of the solvent containing sulfur element include dimethylsulfoxide and carbon disulfide.

When a solvent is used, the amount of the solvent used relative to 1 kg of the total amount of the raw materials is preferably 100 mL or more, more preferably 500 mL or more, further preferably 1 L or more, furthermore preferably 2 L or more, and furthermore preferably 4 L or more, and the upper limit is preferably 50 L or less, more preferably 20 L or less, further preferably 15 L or less, and furthermore preferably 12 L or less. When the amount of the solvent used is within the above range, the raw materials can be efficiently reacted.

(Drying)

When mixing is performed using a solvent, drying the fluid (generally, slurry) obtained by mixing may be included after mixing. When a complexing agent is used as a solvent, by removing the complexing agent from a complex containing the complexing agent, when the complexing agent and a solvent are used together, by removing the complexing agent from a complex containing the complexing agent and removing the solvent, or when a solvent other than the complexing agent is used, by removing the solvent, a sulfide is obtained. The resulting sulfide has a structure that a solid electrolyte has, such as a $PS_4^{3-}$ unit, and exhibits an ionic conductivity due to an alkali metal element, such as lithium element or sodium element.

Drying can be performed for the fluid resulting from the mixing at a temperature according to the type of the solvent, for example, a temperature of the boiling point of the complexing agent or higher.

Drying can be performed by volatilizing the complexing agent, and the solvent used as required, by drying at a reduced pressure (vacuum drying) generally at 5 to 100°C, preferably 10 to 85°C, more preferably 15 to 70°C, and furthermore preferably approximately a room temperature (23°C) (for example, approximately a room temperature ± 5°C) with a vacuum pump or the like.

Drying may be performed for the fluid by filtration using a glass filter or the like, solid-liquid separation by decantation, solid-liquid separation using a centrifuge or the like. When a solvent other than a complexing agent is used, a sulfide is obtained by solid-liquid separation. When a complexing agent is used as a solvent, after performing solid-liquid separation, drying may be performed under the temperature condition as described above to remove the complexing agent taken in a complex.

The solid-liquid separation is easily performed, specifically, by decantation in which, after the fluid is transferred into a vessel and a sulfide (or when a complexing agent is contained, a complex (which can be referred to as a precursor of a sulfide) is precipitated, the complexing agent and the solvent which are supernatant are removed, or by filtration using a glass filter having a pore size of, for example, approximately 10 to 200 $\mu$m, and preferably 20 to 150 $\mu$m.

Drying may be performed after mixing and before a hydrogen treatment as described later or may be performed after the hydrogen treatment.

($Li_2S$ and $P_2S_5$)

In the production method of this embodiment, $Li_2S$ (lithium sulfide) and $P_2S_5$ (phosphorus pentasulfide) are

required to be used.

$Li_2S$ used in this embodiment is preferably particles.

The average particle size ($D_{50}$) of the $Li_2S$ particles is preferably 10 $\mu$m or more and 2000 $\mu$m or less, more preferably 30 $\mu$m or more and 1500 $\mu$m or less, and further preferably 50 $\mu$m or more and 1000 $\mu$m or less. In the present description, the average particle size ($D_{50}$) is a particle diameter to reach 50% of all the particles in sequential cumulation from particles of the smallest particle size in a particle size distribution cumulative curve drawn, and the volumetric distribution is an average particle diameter which can be measured, for example, using a laser diffraction/scattering particle size distribution analyzer. Also for $P_2S_5$, $P_2S_5$ particles having an average particle size similar to that of the $Li_2S$ particles are preferred, that is, $P_2S_5$ particles having an average particle size within the same range as that of the $Li_2S$ particles are preferred.

In this embodiment, $Li_2S$ is added in the step (A) and the step (B), and $P_2S_5$ is added in the step (A).

In the step (A), from the viewpoint of optimizing the content of $P_2S_7^{4-}$ in the solid electrolyte (A) to prepare a sulfide solid electrolyte glass ceramic having a high ionic conductivity, $P_2S_5$ is preferably used in an amount of 0.34 mole or more relative to 1.00 mole of $Li_2S$, more preferably used in an amount of 0.38 mole or more, and further preferably used in an amount of 0.40 mole or more, and preferably used in an amount of 0.70 mole or less, more preferably used in an amount of 0.60 mole or less, further preferably used in an amount of 0.55 mole or less.

In this embodiment, in the entire process in which the step (A) and the step (B) are combined, from the viewpoints that the sulfide solid electrolyte glass ceramic has $PS_4^{3-}$ as a main backbone and that the $P_2S_6^{4-}$ phosphorous ratio in the sulfide solid electrolyte is reduced to achieve a high ionic conductivity, relative to 1.00 mole of $Li_2S$ used, $P_2S_5$ is preferably used in an amount of 0.10 mole or more, more preferably used in an amount of 0.20 mole or more, and further preferably used in an amount of 0.30 mole or more, and preferably used in an amount of 0.50 mole or less, more preferably used in an amount of 0.40 mole or less, and further preferably used in an amount of 0.35 mole or less.

In this embodiment, $Li_2S$ is added at least in the step (A) and in the step (B). From the viewpoint that the $P_2S_6^{4-}$ phosphorous ratio in the sulfide solid electrolyte is reduced and a high ionic conductivity is achieved, relative to 1.00 mole of $Li_2S$ used in the step (A), $Li_2S$ is preferably used in the step (B) in an amount of 0.10 mole or more, more preferably used in an amount of 0.20 mole or more, and further preferably used in an amount of 0.25 mole or more, and preferably used in an amount of 0.80 mole or less, more preferably used in an amount of 0.70 mole or less, and further preferably used in an amount of 0.65 mole or less.

As $Li_2S$ and $P_2S_5$, those that are generally commercially available can be used, but those that are prepared by a method described in the section of Examples may be used.

From the viewpoint of increasing the ionic conductivity of the sulfide solid electrolyte glass ceramic, the purity of $Li_2S$ is preferably 95% by mass or more, and more preferably 98% by mass or more, and from the viewpoint of increasing the ionic conductivity of the sulfide solid electrolyte glass ceramic on the basis of $P_4S_{10}$, the purity of $P_2S_5$ is preferably 95% by mass or more, and more preferably 98% by mass or more.

(Lithium halide)

In this embodiment, from the viewpoint of obtaining a sulfide solid electrolyte glass ceramic having a high ionic conductivity, a lithium halide is required to be further added in the step (B) for introducing a halogen atom into the sulfide solid electrolyte.

The lithium halide is more preferably at least one selected from lithium chloride, lithium bromide, and lithium iodide, and further preferably a combination of lithium chloride and lithium bromide or a combination of lithium bromide and lithium iodide.

The amount of the lithium halide used may be any as long as it satisfies the aforementioned preferred blending ratio (molar ratio) of the lithium atom, sulfur atom, phosphorus atom, and halogen atom.

(Solid electrolyte (A))

The solid electrolyte (A) is a solid electrolyte obtained in the step (A), and is preferably a sulfide solid electrolyte having $PS_4^{3-}$ or $P_2S_7^{4-}$ as a main backbone, and is further preferably a sulfide solid electrolyte having $PS_4^{3-}$ as a main backbone.

In the present description, the "main backbone" means that the phosphorous ratio of the $PS_4^{3-}$ unit ($PS_4^{3-}$ phosphorous ratio) is more than 50.0%, and from the viewpoint of increasing the ionic conductivity of the sulfide solid electrolyte, the $PS_4^{3-}$ fraction is preferably 60.0% or more, more preferably 70.0% or more, and further preferably 80.0% or more, and the upper limit is not particularly limited and is preferably close to 100%, but from the viewpoint of both achieving easy production and ionic conductivity, is preferably 99.5% or less, more preferably 98.0% or less, and further preferably 95.0% or less.

The solid electrolyte (A) preferably contains $P_2S_7^{4-}$. Small amounts of $Li_2S$ and $P_2S_5$ which are used as raw

materials, $PS_4^{3-}$ which is a target substance, and furthermore, $P_2S_6^{4-}$ may be further contained. Among them, an increase in the content of $P_2S_6^{4-}$ in the sulfide solid electrolyte leads to a decrease in the ionic conductivity, and thus the content thereof is preferably reduced.

In the step (B), by further adding $Li_2S$ and a lithium halide to the solid electrolyte (A) which contains $Li_4P_2S_7$ to produce a sulfide solid electrolyte, the $P_2S_6^{4-}$ phosphorous ratio in the sulfide solid electrolyte glass ceramic can be reduced, thereby increasing the ionic conductivity. Thus, from the viewpoint of increasing the ionic conductivity of the sulfide solid electrolyte glass ceramic, the $P_2S_7^{4-}$ phosphorous ratio which is measured by $^{31}$P-NMR in the solid electrolyte (A) is preferably 20.0% by mole or more based on the total amount of the solid electrolyte (A), more preferably 30.0% by mole or more, and further preferably 35.0% by mole or more, and the upper limit is not particularly limited, but since the treatment in the step (A) causes $PS_4^{3-}$, the upper limit is preferably 95.0% by mole or less, more preferably 90.0% by mole or less, and further preferably 80.0% by mole or less.

The solid electrolyte (A) may be an amorphous sulfide solid electrolyte or a crystalline sulfide solid electrolyte, but when the solid electrolyte (A) is a crystalline sulfide solid electrolyte, the crystallite diameter of the sulfide solid electrolyte glass ceramic is increased, and thus, this is preferable.

(Solid electrolyte (B))

The solid electrolyte (B) obtained by this embodiment is a product of the step (B), is a production intermediate of a sulfide solid electrolyte glass ceramic, contains a lithium atom, a sulfur atom, and a phosphorus atom, and preferably has $PS_4^{3-}$ as a main backbone.

The solid electrolyte (B) may be a crystalline sulfide solid electrolyte or an amorphous sulfide solid electrolyte.

When the solid electrolyte (B) is a crystalline sulfide solid electrolyte, the solid electrolyte (B) can be used as a sulfide solid electrolyte glass ceramic, or may be further heated to promote crystallization.

When the solid electrolyte (B) is an amorphous sulfide solid electrolyte, the solid electrolyte (B) can be made to a sulfide solid electrolyte glass ceramic by heating (crystallization) as described later.

The solid electrolyte (B) contains a halogen atom, and preferred examples of a typical solid electrolyte (B) containing a halogen atom include a solid electrolyte constituted of lithium sulfide, phosphorus sulfide, and a lithium halide, such as $Li_2S$-$P_2S_5$-$LiI$, $Li_2S$-$P_2S_5$-$LiCl$, $Li_2S$-$P_2S_5$-$LiBr$, or $Li_2S$-$P_2S_5$-$LiI$-$LiBr$; and a solid electrolyte further containing another atom, for example, an oxygen atom or a silicon atom, such as $Li_2S$-$P_2S_5$-$Li_2O$-$LiI$ or $Li_2S$-$SiS_2$-$P_2S_5$-$LiO$. From the viewpoint of achieving a higher ionic conductivity, a solid electrolyte constituted of lithium sulfide, phosphorus sulfide, and a lithium halide, such as $Li_2S$-$P_2S_5$-$LiI$, $Li_2S$-$P_2S_5$-$LiCl$, $Li_2S$-$P_2S_5$-$LiBr$, or $Li_2S$-$P_2S_5$-$LiI$-$LiBr$ is preferred.

The kind of the atoms constituting the solid electrolyte (B) can be known, for example, by ICP emission spectrophotometer.

When the solid electrolyte (B) of this embodiment is an amorphous sulfide solid electrolyte, the $P_2S_6^{4-}$ phosphorous ratio determined by a solid $^{31}$P-NMR measurement of the solid electrolyte (B) is preferably 15.0% by mole or less for increasing the ionic conductivity and water resistance, and from the viewpoint of increasing the ionic conductivity and water resistance, the $P_2S_6^{4-}$ phosphorous ratio is more preferably 10.0% by mole or less, and further preferably 7.0% by mole or less, and the lower limit is not particularly limited since $P_2S_6^{4-}$ is preferably not contained for increasing the ionic conductivity and water resistance.

The solid electrolyte (B) of this embodiment may be heated as required.

The $P_2S_6^{4-}$ phosphorous ratio determined by a solid $^{31}$P-NMR measurement of the solid electrolyte (B) after heating is preferably 7.5% by mole or less. $P_2S_6^{4-}$ is easily hydrolyzed as described above, and when the $P_2S_6^{4-}$ phosphorous ratio is low, the water resistance is increased, and thus, this is preferable. For increasing the ionic conductivity and water resistance, the $P_2S_6^{4-}$ phosphorous ratio is preferably 5.5% by mole or less, more preferably 4.0% by mole or less, further preferably 2.0% by mole or less, furthermore preferably 1.5% by mole or less, more prominently preferably 1.0% by mole or less, and furthermore prominently preferably 0.8% by mole or less. A lower $P_2S_6^{4-}$ phosphorous ratio is more preferred, and the lower limit is not particularly limited, and may be any value as long as it is substantially 0% by mole or more. The "substantially" means that the "0% by mole" encompasses a detection limit or lower.

The solid electrolyte (B) after heating may be the sulfide solid electrolyte glass ceramic of this embodiment, or may be further subjected to pulverization or the like as required to produce the sulfide solid electrolyte glass ceramic.

When the solid electrolyte (B) obtained in this embodiment has at least $Li_2S$-$P_2S_5$, the molar ratio of $Li_2S$ to $P_2S_5$ is, from the viewpoint of achieving a higher ionic conductivity, preferably 65 to 85 : 15 to 35, more preferably 70 to 80 : 20 to 30, and further preferably 72 to 78 : 22 to 28.

When the solid electrolyte (B) obtained in this embodiment is, for example, $Li_2S$-$P_2S_5$-$LiI$-$LiBr$, the sum of the contents of $Li_2S$ and $P_2S_5$ is preferably 60 to 95% by mole, more preferably 65 to 90% by mole, and further preferably 70 to 85% by mole. The proportion of lithium bromide to the sum of lithium bromide and lithium iodide is preferably 1 to 99% by mole, more preferably 20 to 90% by mole, further preferably 40 to 80% by mole, and particularly preferably 50 to 70% by mole.

In the solid electrolyte (B) obtained in this embodiment, the blending ratio (molar ratio) of the lithium atom, sulfur atom, phosphorus atom, and halogen atom are preferably 1.0 to 1.8 : 1.0 to 2.0 : 0.1 to 0.8:0.01 to 0.6, more preferably 1.1 to 1.7 : 1.2 to 1.8 : 0.2 to 0.6 : 0.05 to 0.5, and further preferably 1.2 to 1.6 : 1.3 to 1.7 : 0.25 to 0.5 : 0.08 to 0.4. When bromine and iodine are used in combination as the halogen atoms, the blending ratio (molar ratio) of the lithium atom, sulfur atom, phosphorus atom, bromine, and iodine is preferably 1.0 to 1.8 : 1.0 to 2.0 : 0.1 to 0.8 : 0.01 to 0.3 : 0.01 to 0.3, more preferably 1.1 to 1.7 : 1.2 to 1.8 : 0.2 to 0.6 : 0.02 to 0.25 : 0.02 to 0.25, more preferably 1.2 to 1.6 : 1.3 to 1.7 : 0.25 to 0.5 : 0.03 to 0.2 : 0.03 to 0.2, and further preferably 1.35 to 1.45 : 1.4 to 1.7 : 0.3 to 0.45 : 0.04 to 0.18 : 0.04 to 0.18. When the blending ratio (molar ratio) of the lithium atom, sulfur atom, phosphorus atom, and halogen atom is in the above range, a sulfide solid electrolyte glass ceramic that has a thio-LISICON Region II-type crystal structure as described later and has a higher ionic conductivity is easily produced.

The shape of the solid electrolyte (B) is not particularly limited, but an example thereof is a particle form. As the average particle size ($D_{50}$) of the solid electrolyte (B) of a particle form, for example, an average particle size ($D_{50}$) in the range of 0.01 $\mu$m to 500 $\mu$m and that in the range of 0.1 to 200 $\mu$m can be exemplified.

The exothermic peak of the sulfide solid electrolyte glass ceramic of this embodiment is preferably 120°C or higher and 300°C or lower, more preferably 150°C or higher and 250°C or lower, further preferably 170°C or higher and 220°C or lower.

In differential thermal analysis (DTA) of the solid electrolyte (B) which is a production intermediate, when the half-value width of the exothermal peak that appears first at a temperature of 130°C or higher in the course of rising the temperature is 8.0°C or less, the ionic conductivity and water resistance of the sulfide solid electrolyte glass ceramic of this embodiment is increased, and thus, this is preferable, and the half-value width is more preferably 7.0°C or less, and further preferably 6.5°C or less.

(Heating)

In the production method of this embodiment, at least one of further heating the solid electrolyte (A) and further heating the solid electrolyte (B) is preferably contained.

For obtaining a solid electrolyte (A) which is a crystalline sulfide solid electrolyte (hereinafter also referred to as crystalline solid electrolyte (A)) or a sulfide solid electrolyte glass ceramic, a solid electrolyte (A) which is an amorphous sulfide solid electrolyte (hereinafter also referred to as amorphous solid electrolyte (A)) or a solid electrolyte (B) which is an amorphous sulfide solid electrolyte (hereinafter also referred to as amorphous solid electrolyte (B)) may be produced, followed by heating.

More specifically, the solid electrolyte (A) obtained by the step (A) may be heated to produce a crystalline solid electrolyte (A), which may be used as a raw material of the step (B), or the solid electrolyte (B) obtained by the step (B) may be heated after the step (B) to produce a sulfide solid electrolyte glass ceramic.

By heating the solid electrolyte (A) obtained in the step (A) to produce a crystalline solid electrolyte (A), followed by performing the step (B), the crystallite diameter of the sulfide solid electrolyte glass ceramic increases, and thus, this is preferable.

When an amorphous solid electrolyte (B) is heated to produce a sulfide solid electrolyte glass ceramic, the heating temperature may be determined according to the structure of the sulfide solid electrolyte glass ceramic. Specifically, using a differential thermal analyzer (DTA apparatus), the amorphous solid electrolyte (B) is subjected to a differential thermal analysis (DTA) under a temperature rising condition of 10°C/minute, and based on the temperature of the peak top of an exothermal peak observed at the lowermost temperature in the range of 130°C or higher, preferably a temperature of 5°C or more lower, more preferably a temperature of 7°C or more lower, and further preferably a temperature of 10°C or more lower is determined as the heating temperature, and the lower limit is not particularly limited, but is preferably a temperature of 30°C or less lower, and more preferably a temperature of 25°C or less lower. When the heating temperature is in such a temperature range, the sulfide solid electrolyte glass ceramic can be more efficiently and certainly produce.

When an amorphous solid electrolyte (A) is heated to produce a crystalline solid electrolyte (A), a differential thermal analysis (DTA) is performed using a differential thermal analyzer (DTA apparatus) under a temperature rising condition of 10°C/minute, and the heating treatment is performed around the peak top of an exothermal peak. A preferred temperature of the heating treatment is, based on the exothermal peak top temperature, in the range of -50°C to 100°C, preferably in the range of -30°C to 80°C, further preferably in the range of -15°C to 65°C.

The heating temperature for obtaining a crystalline sulfide solid electrolyte (A) or a sulfide solid electrolyte glass ceramic cannot be completely defined because it depends on the structure of the resulting crystalline sulfide solid electrolyte (A) or sulfide solid electrolyte glass ceramic, but, is generally preferably 130°C or higher, more preferably 135°C or higher, and further preferably 140°C or higher, and the upper limit is not particularly limited, but preferably 350°C or lower, more preferably 330°C or lower, and further preferably 320°C or lower.

The heating time is not particularly limited as long as a desired crystalline solid electrolyte (A) or sulfide solid electrolyte glass ceramic is obtained, but, for example, is preferably 1 minute or more, more preferably 10 minutes or more, further preferably 30 minutes or more, and furthermore preferably 1 hour or more. The upper limit of the heating time is not particularly limited, but is preferably 24 hours or less, more preferably 10 hours or less, further preferably 5 hours or less, furthermore preferably 3 hours or less.

In addition, the heating is preferably performed in an inert gas atmosphere (for example, nitrogen atmosphere, argon atmosphere) or a reduced-pressure atmosphere (especially in vacuum). This is because deterioration (for example, oxidation) of the product can be prevented. The method for heating is not particularly limited, and examples thereof include methods using a hot plate, a vacuum heater, an argon gas atmosphere furnace, and a kiln. Industrially, a horizontal dryer, a horizontal vibrating fluid dryer, or the like having a heating means and a feeding mechanism can be used, and can be selected depending on the amount to be treated by heating.

(Pulverization)

This embodiment preferably further includes pulverizing the solid electrolyte (A), the solid electrolyte (B), or the sulfide solid electrolyte glass ceramic, and it is also preferred that two or more pulverization steps are included. By pulverizing the solid electrolyte (A), the solid electrolyte (B), or the sulfide solid electrolyte glass ceramic, it is possible to produce a sulfide solid electrolyte glass ceramic having a small particle diameter while suppressing a decrease in the ionic conductivity.

The pulverizer to be used in the pulverization of this embodiment is not particularly limited as long as it can pulverize particles, and, for example, a media-style pulverizer using pulverization media can be used.

As a pulverizer, a dry pulverizer, for example, a dry media-style pulverizer, such as a dry bead mill, a dry ball mill, or a dry vibration mill, a dry non-media pulverizer, such as a jet mill, can be used. In the case of a slurry which contains a solvent, a wet bead mill, a wet ball mill, a wet vibration mill, and the like are typically exemplified. A dry bead mill or a wet bead mill using beads as a pulverization media is preferred in that the conditions of the pulverization operation can be freely adjusted to easily handle an object having a smaller particle size.

The size of the beads used in the pulverizer can be appropriately selected according to the desired particle size, the amount to be treated, and the like, and, for example, the diameter of the beads may be approximately 0.05 mm$\varphi$ or more and 5.0 mm$\varphi$ or less, preferably 0.1 mm$\varphi$ or more and 3.0 mm$\varphi$ or less, and more preferably 0.3 mm$\varphi$ or more and 1.5 mm$\varphi$ or less.

As a pulverizer to be used in the pulverization of this embodiment, a machine that can pulverize an object using an ultrasonic wave, for example, a machine referred to as an ultrasonic pulverizer, an ultrasonic homogenizer, a probe ultrasonic pulverizer, or the like can be used.

In this case, various conditions, for example, the frequency of the ultrasonic wave can be appropriately selected according to a desired average particle size and the like of the complex, and the frequency may be, for example, approximately 1 kHz or more and 100 kHz or lower, and from the viewpoint of more efficiently pulverizing the complex, is preferably 3 kHz or more and 50 kHz or lower, more preferably 5 kHz or more and 40 kHz or lower, and further preferably 10 kHz or more and 30 kHz or lower.

The output of the ultrasonic pulverizer may be any of generally approximately 500 to 16,000 W, and is preferably 600 to 10,000 W, more preferably 750 to 5,000 W, and further preferably 900 to 1,500 W.

The average particle size ($D_{50}$) of the complex obtained by the pulverization is appropriately determined according to the request, but is generally 0.01 $\mu$m or more and 50 $\mu$m or less, preferably 0.03 $\mu$m or more and 5 $\mu$m or less, and more preferably 0.05 $\mu$m or more and 3 $\mu$m or less. With such an average particle size, a request for a solid electrolyte of a particle size as small as an average particle size of 1 $\mu$m or less can be responded.

The time for pulverization is not particularly limited as long as a complex having a desired average particle size is obtained, but is generally 0.1 hour or more and 100 hours or less, and from the viewpoint of efficiently making the particle size a desired size, is preferably 0.3 hours or more and 72 hours or less, more preferably 0.5 hours or more and 48 hours or less, and further preferably 1 hour or more and 24 hours or less.

(Use of sulfide solid electrolyte glass ceramic)

The sulfide solid electrolyte glass ceramic of this embodiment, which has a high ionic conductivity in addition to a certain average particle size and specific surface area, and has an excellent battery performance, and hardly generates H$_2$S, is suitably used in an electrode mixture material for a lithium ion battery and in a lithium ion battery.

The sulfide solid electrolyte glass ceramic of this embodiment is especially suitable when lithium element is adopted as a conductive species. The sulfide solid electrolyte glass ceramic of this embodiment may be used in a positive electrode layer, may be used in a negative electrode layer, or may be used in an electrolyte layer.

In addition, in the battery, besides a positive electrode layer, an electrolyte layer, and a negative electrode layer, a collector is preferably used, and as the collector, a known collector can be used. A layer in which a substance that reacts with the sulfide solid electrolyte glass ceramic, such as Au, Pt, Al, Ti, or Cu, is coated with Au or the like can be used.

[Electrode mixture material]

The electrode mixture material of this embodiment is required to contain the sulfide solid electrolyte glass ceramic and an electrode active material as described below.

(Electrode active material)

As the electrode active material, a positive electrode active material or a negative electrode active material is adopted according to whether a positive electrode or a negative electrode the electrode mixture material is to be used in.

As a positive electrode active material, any one can be used with no limitation as long as it can promote a battery chemical reaction accompanied with migration of lithium ions due to an atom adopted for developing ionic conductivity in relation with a negative electrode active material, preferably a lithium atom. As such a positive electrode active material in which lithium ions can be inserted and eliminated, an oxide-based positive electrode active material, a sulfide-based positive electrode active material, and the like are exemplified.

Preferred examples of the oxide-based positive electrode active material include lithium-containing transition metal composite oxides, such as LMO (lithium manganate), LCO (lithium cobaltate), NMC (lithium nickel manganese cobalt oxide), NCA (lithium nickel cobalt aluminum oxide), LNCO (lithium nickel cobalt oxide), and an olivine type compound ($LiMeNPO_4$, Me=Fe, Co, Ni, Mn).

Examples of the sulfide-based positive electrode active material include titanium sulfide ($TiS_2$), molybdenum sulfide ($MoS_2$), iron sulfide ($FeS$, $FeS_2$), copper sulfide ($CuS$), and nickel sulfide ($Ni_3S_2$).

Besides the above positive electrode active materials, niobium selenide ($NbSe_3$) and the like can also be used.

One of the positive electrode active materials can be used alone or two or more thereof can be used in combination.

As a negative electrode active material, any one can be used with no limitation as long as it can promote a battery chemical reaction accompanied with migration of lithium ions preferably due to a lithium atom, such as a metal that can form an alloy with an atom adopted for developing ionic conductivity, preferably a lithium atom, an oxide of the metal, an alloy of the metal with a lithium atom. As such a negative electrode active material in which lithium ions can be inserted and eliminated, a substance that is known as a negative electrode active material in the field of battery can be adopted with no limitation.

Examples of the negative electrode active material include metal lithium or a metal that can form an alloy with metal lithium, such as metal lithium, metal indium, metal aluminum, metal silicon, or metal tin, an oxide of the metals, and an alloy of the metals with metal lithium.

The electrode active material used in this embodiment may be one a surface of which is coated, that is, one that has a coating layer.

Examples of a material that forms the coating layer include ionic conductors, such as a nitride and an oxide of an atom that develops an ionic conductivity in a sulfide solid electrolyte, preferably a lithium atom or a composite thereof. Specific examples include lithium nitride ($Li_3N$), a conductor having a LISICON-type crystal structure having $Li_4GeO_4$ as a main structure, such as $Li_{4-2x}Zn_xGeO_4$, a conductor having a thio-LISICON-type crystal structure having a $Li_3PO_4$-type backbone structure, such as $Li_{4-x}Ge_{1-x}P_xS_4$, a conductor having a perovskite-type crystal structure, such as $La_{2/3-x}Li_{3x}TiO_3$, and a conductor having a NASICON-type crystal structure, such as $LiTi_2(PO_4)_3$.

In addition, examples thereof include oxide-based conductors, for example, lithium titanates, such as $Li_yTi_{3-y}O_4$ (0<y<3) and $Li_4Ti_5O_{12}$(LTO), lithium metal oxides of metals belonging to the Group 5 in the periodic table, such as $LiNbO_3$ and $LiTaO_3$, and $Li_2O$-$B_2O_3$-$P_2O_5$-based, $Li_2O$-$B_2O_3$-ZnO-based, and $Li_2O$-$Al_2O_3$-$SiO_2$-$P_2O_5$-$TiO_2$-based conductors.

An electrode active material having a coating layer can be produced, for example, by depositing onto a surface of an electrode active material a solution containing various kinds of atoms constituting a material to form a coating layer and baking the electrode active material after deposition preferably at 200°C or higher and 400°C or lower.

Here, as the solution containing various kinds of atoms, a solution containing an alkoxide of various metals, such as lithium ethoxide, titanium isopropoxide, niobium isopropoxide, or tantalum isopropoxide, may be used. In this case, as the solvent, an alcohol solvent, such as ethanol or butanol, an aliphatic hydrocarbon solvent, such as hexane, heptane, or octane; an aromatic hydrocarbon solvent, such as benzene, toluene, or xylene, or the like may be used.

In addition, the deposition may also be performed by immersion, spray coating, or the like.

The baking temperature is, from the viewpoint of increasing the production efficiency and battery performance, preferably 200°C or higher and 400°C or lower, and more preferably 250°C or higher and 390°C or lower. The time for baking is generally approximately 1 minute to 10 hours, and preferably 10 minutes to 4 hours.

The coverage of the coating layer is, based on the surface area of the electrode active material, preferably 90% or more, more preferably 95% or more, further preferably 100%, that is, the entire surface is preferably coated. The thickness of the coating layer is preferably 1 nm or more, and more preferably 2 nm or more, and the upper limit is preferably 30 nm or less, and more preferably 25 nm or less.

The thickness of the coating layer can be measured by observing a cross section with a transmission electron microscope (TEM), and the coverage can be calculated from the thickness, elemental analytical value, and BET specific surface area of the coating layer.

(Other components)

The electrode mixture material of this embodiment may contain, besides the sulfide solid electrolyte glass ceramic and the electrode active material, for example, a conductive material, a binder, and other components. That is, in the method for producing an electrode mixture material of this embodiment, besides the sulfide solid electrolyte glass ceramic and the electrode active material, for example, a conductive material, a binder, and other components may be used. The conductive material, binder, or other components can be used, in mixing the sulfide solid electrolyte glass ceramic and the electrode active material, by being further added to and mixed with the sulfide solid electrolyte glass ceramic and the electrode active material.

From the viewpoint of increasing the battery performance by increasing the electron conductivity, examples of the conductive material include carbon materials, such as artificial graphite, graphite carbon fiber, resin baked carbon, thermolysis vapor phase epitaxy carbon, coke, mesocarbon microbead, furfuryl alcohol resin baked carbon, polyacene, pitch-based carbon fiber, vapor phase epitaxy carbon fiber, natural graphite, and hardly graphitizable carbon.

By using a binder, the strength of a positive electrode or a negative electrode, when produced, is increased.

The binder is not particularly limited as long as it can impart a binding function, a softening function, or other functions, and examples thereof include fluoropolymers, such as polytetrafluoroethylene and polyvinylidene fluoride, thermoplastic elastomers, such as a butylene rubber and a styrene-butadiene rubber, and various resins, such as an acrylic resin, an acryl polyol resin, a polyvinyl acetal resin, a polyvinyl butyral resin, and a silicone resin.

In view of an increase in the battery performance and the production efficiency, the blending ratio (mass ratio) of the electrode active material to the sulfide solid electrolyte glass ceramic in the electrode mixture material is preferably 99.5 : 0.5 to 40 : 60, more preferably 99 : 1 to 50 : 50, and further preferably 98 : 2 to 60 : 40.

In the case of containing a conductive material, the content of the conductive material in the electrode mixture material is not particularly limited, but in view of an increase in the battery performance and the production efficiency, is preferably 0.5% by mass or more, more preferably 1% by mass or more, and further preferably 1.5% by mass or more, and the upper limit is preferably 10% by mass or less, preferably 8% by mass or less, and further preferably 5% by mass or less.

When a binder is contained, the content of the binder in the electrode mixture material is not particularly limited, but in view of an increase in the battery performance and the production efficiency, is preferably 1% by mass or more, more preferably 3% by mass or more, and further preferably 5% by mass or more, and the upper limit is preferably 20% by mass or less, preferably 15% by mass or less, and further preferably 10% by mass or less.

[Lithium ion battery]

The lithium ion battery of this embodiment is required to contain at least one selected from the aforementioned sulfide solid electrolyte glass ceramic of this embodiment and the aforementioned electrode mixture material.

The configuration of the lithium ion battery of this embodiment is not particularly limited as long as the lithium ion battery contains either of the sulfide solid electrolyte glass ceramic of this embodiment or an electrode mixture material containing the sulfide solid electrolyte glass ceramic, and may be any that has a configuration of a generally-used lithium ion battery.

The lithium ion battery of this embodiment is, for example, preferably a lithium ion battery that includes a positive electrode layer, a negative electrode layer, an electrolyte layer, and a collector. As the positive electrode layer and the negative electrode layer, the electrode mixture material of this embodiment is preferably used, and as the electrolyte layer, the sulfide solid electrolyte glass ceramic of this embodiment is preferably used.

As the collector, a known collector can be used. A layer in which a substance that reacts with the solid electrolyte, such as Au, Pt, Al, Ti, or Cu, is coated with Au or the like can be used.

Examples

Next, the present invention will be specifically described with reference to Examples, but the present invention is not to be limited to the examples.

(1) The measurement methods will be described.

(1-1) X-ray diffraction (XRD) measurement (XRD pattern)

A produced solid electrolyte was measured by an XRD measurement.

A powder of a solid electrolyte produced in each example was charged into a groove of a diameter of 20 mm and a depth of 0.2 mm and was leveled with a glass to prepare a sample. This sample was sealed with a Kapton film for XRD and was subjected to a measurement without contact with air.

The measurement was performed with a powdery X-ray diffractometer, D2 PHASER, manufactured by BRUKER under the following conditions.

Tube voltage: 30 kV
Tube current: 10 mA
X-ray wavelength: Cu-K$\alpha$ line (1.5418 Å)
Optical system: focusing method

Slit configuration: a solar slit of 4° (both on the incident side and light reception side), a divergence slit of 1 mm, a K$\beta$ filter (Ni plate 0.5%), and an air scatter screen of 3 mm were used)

Detector: semiconductor detector
Measurement range: $2\theta$ = 10-60 deg
Step width, scan speed: 0.05 deg, 0.05 deg/second

A peak appearing at $2\theta$=20.2° and a peak appearing at $2\theta$=29.3° were specified in a XRD pattern obtained.

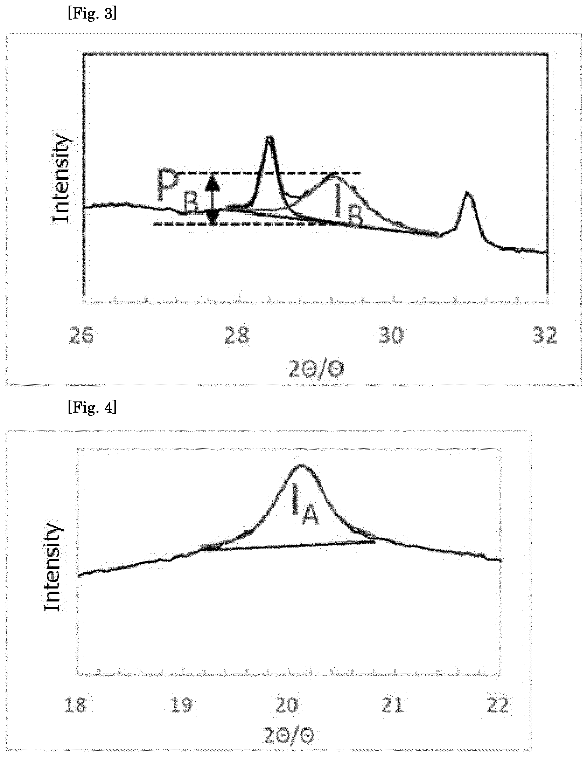

Specifically, a linear base line was set in a shape of a peak obtained by a XRD measurement, a difference between the intensity at each point and the base line was taken to create an XRD curve. On a peak appearing at $2\theta$=20.2°, a linear base line was set within the range of 19.2 to 20.7° and was subtracted, and the peak maximum value in the range of 20.2$\pm$0.3° was taken therefrom as a peak intensity, and in an area surrounded by the base line and the curve of the XRD pattern, a peak in the functions described later was set at 20.2$\pm$0.2°. Thus, the area of the peak determined by curve fitting was taken as the peak area intensity (see Figs. 2 and 4). In addition, on a peak appearing at $2\theta$=29.3°, a linear base line was set within the range of 27.8 to 30.6° and was subtracted, and the peak maximum value in the range of 29.3°$\pm$0.3° was taken therefrom as a peak intensity, and two peaks in the functions described later were set at 28.7$\pm$0.2° and 29.3$\pm$0.2°, followed by curve fitting. The area of the 29.3° peak of the two peaks was taken as the peak area intensity (see Figs 3 and 5).

The peak intensity ($P_A$) and the peak area intensity ($I_A$) of the peak appearing at $2\theta$=20.2° and the peak intensity ($P_B$) and the peak area intensity ($I_B$) of the peak appearing at $2\theta$=29.3° were determined and $P_A/P_B$ and $I_A/I_B$ were calculated from the values.

(1-2) X-ray diffraction (XRD) measurement (crystallite diameter)

The crystallite diameter (L) was determined according to a method of P. Scherrer, et. al. Specifically, the crystallite diameter (L) was determined by calculation according to the following formula based on the results of the same measurement as in (1-1).

$$\text{Crystallite diameter (L)} = K\lambda/(\beta \cdot \cos\theta)$$

K: constant, 0.9 was used.
$\lambda$: 1.5418 Å (Cu-K$\alpha$ line)
$\beta$ : calculated by $\beta$ = w-B.

w: the half-value width of the 23.6° peak obtained by measurement
B: constant of the apparatus (standard material (silicon) was measured in the same manner as in (1-1), and based on the peak of $2\theta$=28.5', B=0.1497° was determined.)

The "w" (half-value width obtained by the measurement) was determined as follows. That is, a linear base line was set on the shape of a peak obtained by an XRD measurement (see Fig. 6), a difference between the intensity of each point and the base line was taken to create an XRD curve (see Fig. 7). The XRD curve was assumed as an expression ($f(x)=(1-\alpha)\times L(x)+\alpha\times G(x)$) composed of the Lorentzian function $L(x)$ and the Gaussian function $G(x)$ and parameters A, w, $x_0$, and $\alpha$ were determined by curve fitting.

[Math. 1]

$$L(x) = A\frac{w^2}{4(x-x_0)^2+w^2}$$

$$G(x) = A\ \exp\left[-4\ln 2\frac{(x-x_0)^2}{w^2}\right]$$

(1-3) Solid $^{31}$P-NMR measurement

Appratus: ECZ400R (manufactured by JEOL Ltd.)
Observed nuclear: $^{31}$P
Observed frequency: 161.994 MHz
Measurement temperature: room temperature

Pulse sequence: single pulse
90° pulse width: 3.2 μs
Waiting time from FID measurement to the next pulse application: 60 s
Rotation number of MAS (magic angle rotation): 11 kHz
Cumulative number: 64 times
Measurement range: 250 ppm to -150 ppm
Amont of sample: 100 mg
External reference: $NH_4H_2PO_4$ (chemical shift 1.00 ppm)

(1-3-1) Case of amorphous sulfide solid electrolyte

By waveform separation through a nonlinear least-squares method in a $^{31}$P-NMR spectrum, a peak signal derived from each phosphorus-containing structure was extracted. The ratio of phosphorus contained in each phosphorus-containing structure in the entire phosphorus (phosphorous ratio, % by mole) was measured. Note that the chemical shifts of the phosphorus-containing structures were assumed as shown in Table 1 to perform the waveform separation. The areas (Sp1, Sp2, etc.) in the table represent the areas of the peaks subjected to the waveform separation.

Table 1

| Assignment | Chemical shift (ppm) | Function used for optimization | Area |
|---|---|---|---|
| $PS_4^{3-}$ glass | 82-85 | Gaussian function | Sp1 |
| $P_2S_6^{4-}$ glass | 102-108 | Gaussian function | Sp2 |
| $P_2S_7^{4-}$ glass | 91.4 | Gaussian function | Sp3 |

$PS_4^{3-}$ Phosphorous ratio (%): $100\times Sp1/(Sp1+Sp2+Sp3)$

$P_2S_6^{4-}$ Phosphorous ratio (%): 100×Sp2/(Sp1+Sp2+Sp3)
$P_2S_7^{4-}$ Phosphorous ratio (%): 100×Sp3/(Sp1+Sp2+Sp3)

(1-3-2) Case of crystalline solid electrolyte (A)

The phosphorous ratio was determined by the same method as in (1-3-1) except for using values in Table 2 as the Chemical shifts of phosphorus-containing structures.

Table 2

| Assignment | Chemical shift (ppm) | Function used for optimization | Area |
|---|---|---|---|
| $P_2S_7^{4-}$ glass | 91.4 | Gaussian function | Sp1 |
| $P_2S_7^{4-}$ crystal | 90-91 | Gaussian function | Sp2 |
| $PS_4^{3-}$ crystal | 86-87.5 | Pseudo-Voigt function | Sp3 |

Note that the $P_2S_7^{4-}$ phosphorous ratio was determined as the sum of the ratio of the $P_2S_7^{4-}$ glass phosphorus and the ratio of the $P_2S_7^{4-}$ crystal phosphorus.
When the peaks of the $PS_4^{3-}$ crystal cannot be sufficiently optimized by one Pseudo-Voigt function, two Pseudo-Voigt functions were used for separation.

(1-3-3) Case of sulfide solid electrolyte glass ceramic of the present invention

The phosphorous ratio was determined by the same method as in (1-3-1) except for using values in Table 3 as the chemical shifts of phosphorus-containing structures.

Table 3

| Assignment | Chemical shift (ppm) | Function used for optimization | Area |
|---|---|---|---|
| $P_2S_6^{4-}$ glass | 102-108 | Gaussian function | Sp1 |
| RII-similar crystal i | fixed to peak positions of 88.5-91.5 | Gaussian function | Sp2 |
| β-similar crystal | 86-87 | Gaussian function | Sp3 |

(1-4) Measurement of ionic conductivity

In this Example, an ionic conductivity was measured as follows.
A sulfide solid electrolyte was molded into a circular pellet having a diameter of 10 mm (cross section S: 0.785 cm$^2$) and a height (L) of 0.1 to 0.3 cm to prepare a sample. Electrode terminals were attached to the sample from above and below, and measurement was performed by an alternating current impedance method at 25°C (frequency range: 1 MHz to 100 Hz, amplitude: 10 mV) to provide a Cole-Cole plot. The real part Z' (Ω) at the point at which -Z" (Ω) became the minimum near the right end of an arc observed in a region on the high frequency side was designated as the bulk resistance R (Ω) of the electrolyte, and the ionic conductivity σ (S/cm) was calculated according to the following expressions.

$$R=\rho(L/S)$$

$$\sigma=1/\rho$$

(1-5) Evaluation of water resistance (amount of $H_2S$ generated)

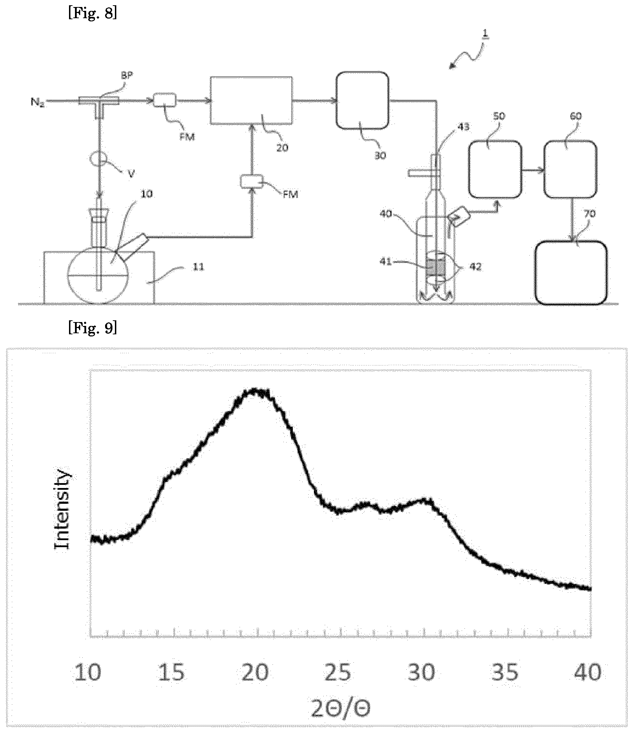

An exposure test apparatus (see Fig. 8) has a configuration including as main components a flask 10 that humidifies nitrogen, a static mixer 20 that mixes the humidified nitrogen and unhumidified nitrogen, a dew point meter 30 (M170/DMT152 manufactured by VAISALA) that measures the water content of the mixed nitrogen, a double reaction tube 40 in which a measurement sample is placed, a dew point meter 50 that measures the water content of nitrogen discharged from the double reaction tube 40, and a hydrogen sulfide meter 60 (Model 3000RS manufactured by AMI) that measures the concentration of hydrogen sulfide contained in the discharged nitrogen, which are connected via tubes (not shown).

The temperature of the flask 10 is set to 10°C by means of a cooling tank 11.

As the tubes that connect the components, a Teflon (registered tradename) tube having a diameter of 6 mm was used. In Fig. 8, the designation of the tubes is omitted and in place thereof, the nitrogen flow is designated by arrows.

The procedure of evaluation is as follows.

In a nitrogen glow box in which the dew point was set to -80°C, about 0.15 g of a powder sample 41 was weighed, was placed inside the reaction tube 40 so as to be interposed between quartz wools 42, and was sealed.

Nitrogen was supplied from a nitrogen source (not shown) at 0.02 MPa into the apparatus 1. The supplied nitrogen passes through a bifurcated pipe BP, and a part thereof is supplied into the flask 10 and is humidified. The other is directly supplied into the static mixer 20 as unhumidified nitrogen. The amount of nitrogen supplied to the flask 10 is adjusted with a needle valve V.

The dew point is controlled by adjusting the flow rates of the unhumidified nitrogen and the humidified nitrogen with flow meters FM each with a needle valve. Specifically, the unhumidified nitrogen and the humidified nitrogen were supplied into the static mixer 20, respectively, at flow rates of 800 mL/min and 10 to 30 mL/min, and were mixed. The dew point of the mixed gas (mixture of unhumidified nitrogen and humidified nitrogen) was read on the dew point meter 30.

After adjusting the dew point to -20°C, a three-way cock 43 was rotated to allow the mixed gas to flow in the reaction tube 40 for 2 hours. The amount of hydrogen sulfide contained in the mixed gas passing through the sample 41 was measured with the hydrogen sulfide meter 60. The amount of hydrogen sulfide generated in this period was determined based on 1 g of the sample (unit: cc/g). The gas after measurement was allows to pass through an alkali trap 70 for removing hydrogen sulfide.

After exposing the sample for a prescribed time, the supply of the humidified nitrogen was stopped and the reaction tube 40 was sealed with the unhumidified nitrogen.

(1-6) Determination of composition with inductively coupled plasma (ICP) emission spectrophotometer

A powder of a sulfide solid electrolyte was weighed and was placed in a vial in an argon atmosphere. An aqueous KOH alkali solution was put into the vial, and the sample was dissolved while paying attention to collection of sulfur, and was diluted, as needed, to prepare a measurement solution. The obtained measurement solution was measured with a Paschen-Runge ICP-OES apparatus (SPECTRO ARCOS manufactured by SPECTRO) to determine the composition.

The solution for calibration curve was prepared using 1000 mg/L standard solutions for ICP measurement for Li, P, and S, a 1000 mg/L standard solution for ion chromatograph for Br, and potassium iodide (special grade reagent) for I.

Two measurement solutions were prepared for each sulfide solid electrolyte and four measurements were conducted with each measurement solution to calculate an average value. Based on the average of the measurement values for the two measurement solutions, the composition was determined. Based on the resulting elemental ratio, the ratio (I2Li$_2$S/I2P$_2$S$_5$) of the molar fraction of Li$_2$S (I2Li$_2$S) to the molar fraction of P$_2$S$_5$ (I2P$_2$S$_5$) was calculated.

(2) Production example of lithium sulfide (Li$_2$S) and phosphorus pentasulfide (P$_2$S$_5$)

(2-1) Production example of lithium sulfide (Li$_2$S)

(2-1-1) Production of Li$_2$S

Toluene (manufactured by Sumitomo Corporation) was dehydrated (the water content measured with a Karl Fischer moisture meter was confirmed to be 100 ppm or less) and was used as a water-insoluble medium. Into a 500 L (liter) stainless steel reaction tank, 303.8 kg of the dehydrated toluene was added under nitrogen flow. Then, 33.8 kg of anhydrous lithium hydroxide (manufactured by Honjo Chemical Corporation) was put therein and the mixture was stirred at 95°C for 2 hours with a Twinstir impeller at 131 rpm to prepare a slurry.

With stirring further continued, while blowing hydrogen sulfide (manufactured by SUMITOMO SEIKA CHEMICALS CO.,LTD) into the slurry at a supply rate of 100 L/minute, the temperature was increased to 104°C. An azeotropic gas of water and toluene was continuously discharged from the reaction tank. The azeotropic gas was dehydrated by being condensed with a condenser outside the system. Meanwhile, toluene was continuously supplied in the same amount as the distilled toluene to keep a constant level of the reaction liquid.

The water content of the condensate gradually decreased and distilled water was not seen in 24 hours after the introduction of hydrogen sulfide. During the reaction, the state is such that solid was dispersed in toluene under stirring, and there was no aqueous layer separated from toluene.

After that, hydrogen sulfide was changed to nitrogen and nitrogen was allowed to flow at 100 L/minute for 1 hour.

The resulting solid was filtrated and dried to obtain Li$_2$S which was a white powder. D$_{50}$ of Li$_2$S was 412 $\mu$m.

(2-1-2) Pulverization of $Li_2S$

$Li_2S$ obtained in (2-1-1) was pulverized in nitrogen atmosphere with a pin mill (100UPZ manufactured by HOSOKAWA MICRON CORPORATION) with a fixed quantity supplier. The supply speed was 80 g/min and the rotation speed of a disc was 18000 rpm.
$D_{50}$ of $Li_2S$ after the pulverization treatment was 7.7 $\mu$m.

(2-2) Production example of phosphorus pentasulfide ($P_2S_5$)

(2-2-1) Pulverization of $P_2S_5$

Pulverization was performed in the same manner as in (2-1-2) except for using $P_2S_5$ (manufactured by Thermphos, $D_{50}$=125 $\mu$m) in place of the $Li_2S$ obtained in (2-1-1).
$D_{50}$ of $P_2S_5$ after the pulverization treatment was 8.7 $\mu$m.

(Example 1)

Step (A)

In a zirconia pot (45 mL) of a planetary ball mill (manufactured by FRITSCH: model P-7), 0.488 g (45.947 g/mol, 0.01062 mol) of $Li_2S$ produced in (2-1-2), 1.012 g (222.272 g/mol, 0.00455 mol) of $P_2S_5$ produced in (2-2-1), and 10 (about 32 g of) zirconia balls having a diameter of 10 mm were placed. The zirconia pot was then completely sealed and the inside thereof was made argon atmosphere. Without heating or cooling, a treatment (mechanical milling) was performed with the planetary ball mill at a rotation number of 370 rpm for 40 hours to obtain a powder (solid electrolyte (A1)).
The resulting powder (solid electrolyte (A1)) was subjected to an X-ray diffraction (XRD) measurement (see Fig. 9), which confirmed that the powder was an amorphous solid electrolyte.

Heating (crystallization) step (first)

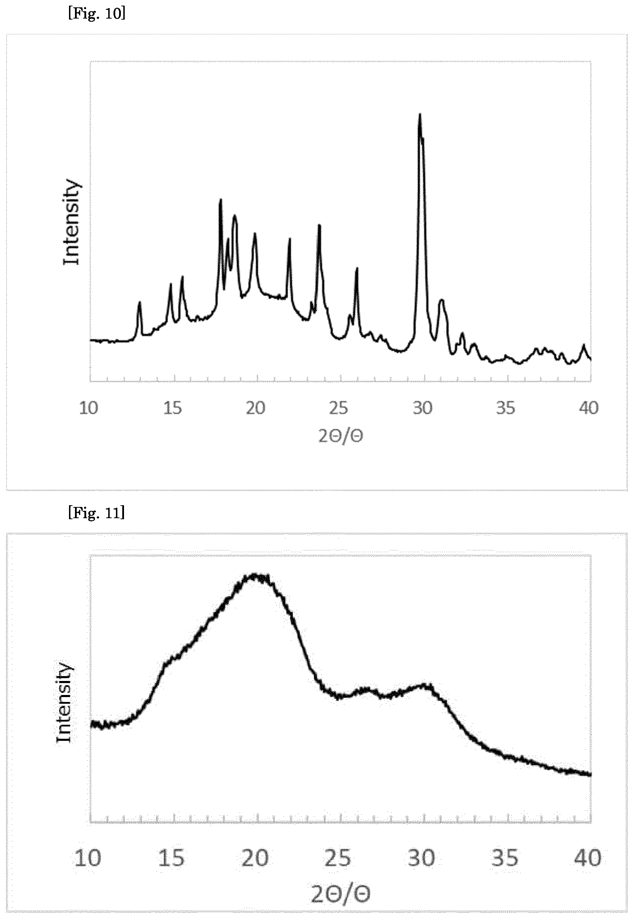

The entire amount of the solid electrolyte (A1) obtained in the step (A) was heated in an electric furnace at 300°C for 3 hours in a glove box in argon atmosphere.
Then, the resultant was gradually cooled and pulverized with a mortar in a glove box in argon atmosphere to obtain a powder (crystalline solid electrolyte (A2)). The result of an X-ray diffraction (XRD) measurement is shown in Fig. 10.

Step (B)

An amorphous solid electrolyte (B1) was produced in the same manner as in the step (A) except that 1.001 g of the solid electrolyte (A2) obtained in the step (A) was weighed, and 0.093 g (0.00202 mol) of $Li_2S$ and further, 0.406 g (133.845 g/mol, 0.00304 mol) of LiI as a lithium halide were added thereto. The result of an X-ray diffraction (XRD) measurement of the amorphous solid electrolyte (B1) is shown in Fig. 11. The $P_2S_6^{4-}$ phosphorous ratio was evaluated by a solid $^{31}$P-NMR measurement (see Table 5).

Heating (crystallization) step

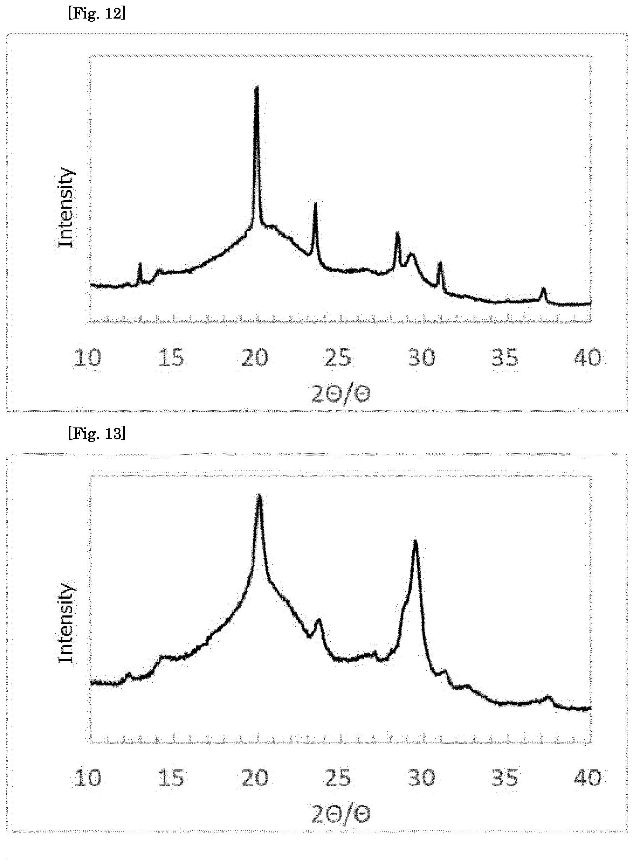

The entire amount of the amorphous solid electrolyte (B1) obtained in the step (B) was heated on a hot plate at 180°C for 2 hours in a glove box in argon atmosphere.
Then, the resultant was gradually cooled and pulverized with a mortar in a glove box in argon atmosphere to obtain a powder (sulfide solid electrolyte glass ceramic (1)).
In an X-ray diffraction (XRD) measurement (see Fig. 12) of the resulting powder, peaks derived from a thio-LISICON Region II-similar crystal structure were observed at 2$\theta$=20.2', 23.6° and 29.3°. It was found from Fig. 12 that the raw materials of $Li_2S$ and LiI were consumed and that a sulfide solid electrolyte glass ceramic containing small amounts of the raw materials as impurities could be obtained.

(Comparative Example 1)

An amorphous solid electrolyte (C1) was obtained in the same manner as in the step (B) of Example 1 except that 0.451 g (0.00981 mol) of $Li_2S$ produced in (2-1-2), 0.727 g (0.00327 mol) of $P_2S_5$ produced in (2-2-1), and as lithium halides, 0.109 g (0.00082 mol) of LiI and further, 0.213 g (86.845 g/mol, 0.00245 mol) of LiBr were added.

Crystallization step

The entire amount of the obtained amorphous sulfide solid electrolyte (C1) was heated on a hot plate at 190°C for 2 hours in a glove box in argon atmosphere.

Then, the resultant was gradually cooled and pulverized with a mortar in a glove box in argon atmosphere to obtain a powder (sulfide solid electrolyte glass ceramic (C1)).

In an X-ray diffraction (XRD) measurement (see Fig. 13) of the resulting powder, peaks derived from a thio-LISICON Region II-similar crystal structure were observed, which confirmed that the powder was a sulfide solid electrolyte glass ceramic.

(Comparative Example 2)

An amorphous solid electrolyte (C2) 2 was obtained in the same manner as in the step (B) of Example 1 except that 1.070 g of the solid electrolyte (A2) obtained by heating the solid electrolyte (A1) obtained in the step (A) was weighed, and 0.100 g (0.00218 mol) of $Li_2S$, and further, as a lithium halides, 0.109 g (0.00082 mol) of LiI and further, 0.213 g (86.845 g/mol, 0.00245 mol) of LiBr were added thereto.

The entire amount of the obtained amorphous sulfide solid electrolyte (C2) was heated on a hot plate at 180°C for 2 hours in a glove box in argon atmosphere to obtain a sulfide solid electrolyte glass ceramic (C2).

The resulting powder was subjected to an X-ray diffraction (XRD) measurement and peaks derived from a thio-LISICON Region II-similar crystal structure were observed.

(Comparative Example 3)

Into a zirconia pot (45 mL) of a planetary ball mill (manufactured by FRITSCH: model P-7), 0.440 g (0.00958 mol) of $Li_2S$ produced in (2-1-2), 0.709 g (0.00319 mol) of $P_2S_5$ produced in (2-2-1), and as lithium halides, 0.213 g (0.00159 mol) of LiI and 0.138 g (0.00159 mol) of LiBr, 53 g of zirconia balls having a diameter of 2 mm, and ethylbenzene (5 mL) as a solvent were put. The zirconia pot was then completely sealed and the inside thereof was made argon atmosphere. Without heating or cooling, a treatment (mechanical milling) was performed with the planetary ball mill at a rotation number of 500 rpm for 40 hours, and the resulting slurry was dried at room temperature under vacuum, and was heated at 80°C to obtain a powder (amorphous solid electrolyte (C3)).

The resulting powder was subjected to an X-ray diffraction (XRD) measurement, which confirmed that the powder was an amorphous solid electrolyte.

Crystallization step

The entire amount of the obtained amorphous sulfide solid electrolyte (C3) was heated on a hot plate at 203°C for 2 hours in a glove box in argon atmosphere.

Then, the resultant was gradually cooled and pulverized with a mortar in a glove box in argon atmosphere to obtain a powder (sulfide solid electrolyte glass ceramic (C3)).

The resulting powder was subjected to an X-ray diffraction (XRD) measurement and peaks derived from a thio-LISICON Region II-similar crystal structure were observed.

(Examples 2 to 10)

Sulfide solid electrolyte glass ceramics (2) to (10) were obtained in the same manner as in Example 1 except for changing the solid electrolyte solid electrolyte (A2), $Li_2S$, LiI, and LiBr used in the step (B) of Example 1 and the amounts thereof, and the heating temperature in the crystallization step as shown in Table 4. In Table 4, the electrolyte A2 means the amount (g) of the crystalline solid electrolyte (A2) used in the step (B). In Comparative Examples 1 and 3, the crystalline solid electrolyte (A2) is not used and $Li_2S$, $P_2S_5$, and a lithium halide are treated at once, and thus, the amount of the electrolyte A2 used is designated as "-". $P_2S_5$ in Table 4 represents the amount of $P_2S_5$ used therein. In Examples 1 to 10 and Comparative Example 2, $P_2S_5$ is not used in the step (B), and thus, $P_2S_5$ is designated as "-".

In this case, peaks derived from a thio-LISICON Region II-similar crystal structure were also observed at $2\theta=20.2°$, 23.6° and 29.3° like in the sulfide solid electrolyte glass ceramic (1).

Table 4

| | Electrolyte A2 | Li$_2$S | P$_2$S$_5$ | LiI | LiBr | Heating temperature |
|---|---|---|---|---|---|---|
| Example 1 | 1.001 g | 0.093 g (0.00202 mol) | - | 0.406 g (0.003046 mol) | - | 175°C |
| Example 2 | 1.013 g | 0.094 g (0.00205 mol) | - | 0.360 g (0.00269 mol) | 0.033 g (0.00038 mol) | 180°C |
| Example 3 | 1.025 g | 0.095 g (0.00207 mol) | - | 0.312 g (0.00233 mol) | 0.068 g (0.00078 mol) | 180°C |
| Example 4 | 1.035 g | 0.096 g (0.00209 mol) | - | 0.369 g (0.00276 mol) | - | 180°C |
| Example 5 | 1.046 g | 0.097 g (0.00212 mol) | - | 0.326 g (0.00244 mol) | 0.030 g (0.00035 mol) | 175°C |
| Example 6 | 1.058 g | 0.098 g (0.00214 mol) | - | 0.283 g (0.00211 mol) | 0.061 g (0.00070 mol) | 180°C |
| Example 7 | 1.081 g | 0.101 g (0.00219 mol) | - | 0.193 g (0.00144 mol) | 0.125 g (0.00144 mol) | 180°C |
| Example 8 | 1.087 g | 0.101 g (0.00220 mol) | - | 0.312 g (0.00233 mol) | - | 195°C |
| Example 9 | 0.980 g | 0.091 g (0.00198 mol) | - | 0.393 g (0.00294 mol) | 0.036 g (0.00042 mol) | 175°C |
| Example 10 | 0.993 g | 0.092 g (0.00201 mol) | - | 0.341 g (0.00255 mol) | 0.074 g (0.00085 mol) | 175°C |
| Comparative Example 1 | - | 0.451 g (0.00981 mol) | 0.727 g (0.003271 mol) | 0.109 g (0.00082 mol) | 0.213 g (0.00245 mol) | 190°C |
| Comparative Example 2 | 1.077 g | 0.100 g (0.00218 mol) | - | 0.109 g (0.00082 mol) | 0.213 g (0.00245 mol) | 190°C |
| Comparative Example 3 | - | 0.440 g (0.00958 mol) | 0.709 g (0.00319 mol) | 0.213 g (0.00159 mol) | 0.138 g (0.00159 mol) | 203°C |

The contents (mol) of the sulfur atom, the phosphorus atom, and the halogen atom based on the content (mol) of the lithium atom, calculated from the contents of the elements in the raw materials in each sulfide solid electrolyte ceramic obtained in Examples 1 to 10 and Comparative Examples 1 to 3 are shown in Table 4.

$P_A/P_B$, $I_A/I_B$, $M_{Br}/M_I$, the $P_2S_6{}^{4-}$ phosphorous ratio, and $I1_{Li2S}/I1_{P2S5}$ are shown in Table 5, and the crystallite diameter, the ionic conductivity, and the amount of H$_2$S generated are shown in Table 6. The blanks in Tables 5 and 6 mean "not measured".

Table 5

| | $P_A/P_B$ | $I_A/I_B$ | $M_{Br}/M_I$ | $P_2S_6^{4-}$ phosphorous ratio | $I1_{Li2S}/I1_{P2S5}$ | $I2_{Li2S}/I2_{P2S5}$ |
|---|---|---|---|---|---|---|
| Example 1 | 6.7 | 1.68 | - | 0.4 | 3.0 | 2.75 |
| Example 2 | 2.7 | 1.08 | 0.143 | 1.3 | 3.0 | 2.99 |
| Example 3 | 1.6 | 0.94 | 0.333 | 1.6 | 3.0 | 3.03 |
| Example 4 | 6.3 | 1.94 | - | 0.0 | 3.0 | 2.98 |
| Example 5 | 3.2 | 0.99 | 0.143 | 2.0 | 3.0 | 3.00 |
| Example 6 | 2.0 | 0.8 | 0.333 | 1.4 | 3.0 | 2.96 |
| Example 7 | 1.2 | 0.79 | 1.000 | 1.2 | 3.0 | 3.00 |
| Example 8 | 5.5 | 1.19 | - | 1.0 | 3.0 | 2.84 |
| Example 9 | 2.7 | 1.08 | 0.143 | 0.8 | 3.0 | 2.94 |
| Example 10 | 1.6 | 0.92 | 0.333 | | 3.0 | 3.05 |
| Comparative Example 1 | 0.8 | 0.57 | 3.000 | 6.2 | 3.0 | 2.98 |
| Comparative Example 2 | 0.7 | 0.51 | 3.000 | 1.7 | 3.0 | 2.98 |
| Comparative Example 3 | 1.0 | 0.77 | 1.000 | 5.6 | 3.0 | 3.01 |

Table 6

| | Crystallite diameter (nm) | Ionic conductivity (mS/cm) | Amount of $H_2S$ generated (cc/g) |
|---|---|---|---|
| Example 1 | 133 | 7.9 | 0.2 |
| Example 2 | 79 | 8.4 | 0.3 |
| Example 3 | 38 | 7.6 | 0.4 |
| Example 4 | 94 | 7.7 | |
| Example 5 | 74 | 7.8 | |
| Example 6 | 56 | 7.6 | |
| Example 7 | 38 | 6.3 | |
| Example 8 | 77 | 6.0 | |
| Example 9 | 57 | 7.6 | |
| Example 10 | 40 | 7.5 | |
| Comparative Example 1 | 29 | 4.3 | |
| Comparative Example 2 | 34 | 4.8 | |
| Comparative Example 3 | 22 | 5.4 | 2.1 |

It was found that the sulfide solid electrolyte glass ceramics of Examples 1 to 10 had a high ionic conductivity and were suitable as a material of a lithium ion battery and the like. In addition, although the ratio $I1Li_2S/I1P_2S_5$ calculated from the contents of the elements in the raw materials and the ratio $I2Li_2S/I2P_2S_5$ measured using an inductively coupled plasma (ICP) emission spectrophotometer shows a difference in composition of 9.1% and 5.6% in Example 1 and Example 8, respectively, they show an approximately 2% difference in the other Examples, and thus, it was found that the ratio was substantially the same as the ratio in the raw materials. Thus, it was found that, according to the production method of this embodiment, a sulfide solid electrolyte glass ceramic having a high ionic conductivity can be obtained while effectively utilizing lithium sulfide ($Li_2S$) and phosphorus sulfide ($P_2S_5$), and furthermore, the solid electrolytes (A) and (B) obtained from raw materials containing lithium sulfide ($Li_2S$) and phosphorus sulfide ($P_2S_5$).

The sulfide solid electrolyte glass ceramic (C1) of Comparative Example 1 was produced in a production method not including the step (A) unlike the method for producing a sulfide solid electrolyte glass ceramic of this embodiment, and $P_A/P_B$ was 0.8. The sulfide solid electrolyte glass ceramic (C1) had a lower ionic conductivity as compared with the sulfide solid electrolyte glass ceramics of Examples, and thus, it was found that when $P_A/P_B$ was 1.0 or less, the effect of the present invention was not exhibited.

The sulfide solid electrolyte glass ceramic (C2) of the Comparative Example 2 had $P_A/P_B$ of 0.7 because the amounts of LiI and LiBr used were changed. It could be found that the sulfide solid electrolyte glass ceramic (C2) had a lower ionic conductivity as compared with the sulfide solid electrolyte glass ceramics of Examples. It was also found that, although the step (A) was included in Comparative Example 2, $P_A/P_B$ was 1.0 or less, and thus, the crystallite diameter was not increased.

The sulfide solid electrolyte glass ceramic (C3) of Comparative Example 3 had $P_A/P_B$ of 1.0 because the amounts of LiI and LiBr used were adjusted, and since $P_A/P_B$ was not more than 1, the ionic conductivity was low. In addition, the sulfide solid electrolyte glass ceramic (C3) of Comparative Example 3 had a higher $P_2S_6^{4-}$ phosphorous ratio as compared with the sulfide solid electrolyte glass ceramics of Examples 2 to 4, and was inferior in the amount of $H_2S$ generated.

It was found that the sulfide solid electrolyte glass ceramics of Examples 1 to 10 were smaller than the sulfide solid electrolyte glass ceramics of Comparative Examples 1 to 3 and generation of $H_2S$ was suppressed.

Industrial Applicability

According to this embodiment, a crystalline sulfide solid electrolyte that has a high ionic conductivity and is superior in battery performance can be produced. A crystalline sulfide solid electrolyte obtained by the production method of this embodiment is suitably used in a lithium ion battery, in particular, a battery used for information-related devices, communication devices, and so on, such as personal computers, video cameras, and mobile phones.

**Claims**

1. A sulfide solid electrolyte glass ceramic comprising a lithium atom, a sulfur atom, a phosphorus atom, and a halogen atom, the sulfide solid electrolyte glass ceramic

    having peaks at diffraction angles (2θ) of 20.2° and 29.3° in X-ray diffractometry using CuKα line, an intensity ratio ($P_A/P_B$) of a peak intensity ($P_A$) of the peak appearing at 2θ=20.2° to a peak intensity ($P_B$) of the peak appearing at 2θ=29.3° being more than 1.0, and
    having a crystallite diameter of 30 nm or more.

2. The sulfide solid electrolyte glass ceramic according to claim 1, wherein an intensity ratio ($I_A/I_B$) of a peak area intensity ($I_A$) of the peak appearing at 2θ=20.2° to a peak area intensity ($I_B$) of the peak appearing at 2θ=29.3° is 0.78 or more.

3. The sulfide solid electrolyte glass ceramic according to claim 1 or 2, further having a peak at 2θ=23.6°.

4. The sulfide solid electrolyte glass ceramic according to any one of claims 1 to 3, comprising an iodine atom as the halogen atom.

5. The sulfide solid electrolyte glass ceramic according to claim 4, further comprising a bromine atom as the halogen atom.

6. The sulfide solid electrolyte glass ceramic according to claim 5, wherein a content of the bromine atom ($M_{Br}$ mol) and a content of the iodine atom ($M_I$ mol) in the sulfide solid electrolyte glass ceramic satisfy a relation of $M_{Br}/M_I \leq 1.00$.

7. The sulfide solid electrolyte glass ceramic according to any one of claims 1 to 6, wherein a $P_2S_6^{4-}$ phosphorous ratio determined by a solid $^{31}P$-NMR measurement is 7.5% by mole or less.

8. The sulfide solid electrolyte glass ceramic according to any one of claims 1 to 7, wherein a ratio ($I1_{Li2S}/I1_{P2S5}$) of a molar fraction of $Li_2S$ ($I1_{Li2S}$) to a molar fraction of $P_2S_5$ ($I1_{P2S5}$) calculated from the contents of the elements in raw materials is 2.60 or more and 3.30 or less.

9. The sulfide solid electrolyte glass ceramic according to any one of claims 1 to 8, wherein a ratio ($I2_{Li2S}/I2_{P2S5}$) of a molar fraction of $Li_2S$ ($I2_{Li2S}$) to a molar fraction of $P_2S_5$ ($I2_{P2S5}$) measured by using an inductively coupled plasma (ICP) emission spectrophotometer is 2.60 or more and 3.30 or less.

10. The sulfide solid electrolyte glass ceramic according to any one of claims 1 to 9, wherein a ratio (content ratio) of a content (mol) of the lithium atom, a content (mol) of the phosphorus atom atom, a content (mol) of the sulfur atom, and a content (mol) of the halogen atom (lithium atom : phosphorus atom atom : sulfur atom : halogen atom) is (3.20 to 3.70) : (0.70 to 1.30) : (3.00 to 5.00) : (0.20 to 0.70).

11. The sulfide solid electrolyte glass ceramic according to any one of claims 1 to 10, comprising a thio-LISICON Region II-type crystal structure.

12. A method for producing the sulfide solid electrolyte glass ceramic according to any one of claims 1 to 11, the method comprising

treating lithium sulfide ($Li_2S$) and phosphorus sulfide ($P_2S_5$) by at least one selected from stirring, mixing, and pulverization to produce a solid electrolyte (A), and
treating the solid electrolyte (A) and a lithium halide by at least one selected from stirring, mixing, and pulverization to produce a solid electrolyte (B).

13. The method for producing the sulfide solid electrolyte glass ceramic according to claim 12, further comprising heating the solid electrolyte (A).

14. The method for producing the sulfide solid electrolyte glass ceramic according to claim 12 or 13, further comprising heating the solid electrolyte (B).

15. The method for producing the sulfide solid electrolyte glass ceramic according to any one of claims 12 to 14, wherein the solid electrolyte (B) has a $P_2S_6^{4-}$ phosphorous ratio determined by a solid $^{31}$P-NMR measurement of 15.0% by mole or less.

16. An electrode mixture material comprising the sulfide solid electrolyte glass ceramic according to any one of claims 1 to 11 and an electrode active material.

17. A lithium ion battery comprising at least one of the sulfide solid electrolyte glass ceramic according to any one of claims 1 to 11 and the electrode mixture material according to claim 16.

[Fig. 1]

Step (A)　　　　$Li_2S$　Treatment
　　　　　　　　　+　 ⟶　 Solid electrolyte (A)
　　　　　　　　　$P_2S_5$

Step (B)　Solid electrolyte (A) + $Li_2S$ Lithium halide　Treatment ⟶ Solid electrolyte (B)

[Fig. 2]

[Fig. 3]

[Fig. 4]

[Fig. 5]

[Fig. 6]

Setting
Baseline

[Fig. 7]

[Fig. 8]

[Fig. 9]

[Fig. 10]

[Fig. 11]

[Fig. 12]

[Fig. 13]

| INTERNATIONAL SEARCH REPORT | International application No. |
|---|---|
| | **PCT/JP2023/013168** |

**A. CLASSIFICATION OF SUBJECT MATTER**

***H01B 1/10***(2006.01)i; ***C01B 25/14***(2006.01)i; ***H01B 1/06***(2006.01)i; ***H01B 13/00***(2006.01)i; ***H01M 4/13***(2010.01)i; ***H01M 4/139***(2010.01)i; ***H01M 4/62***(2006.01)i; ***H01M 10/052***(2010.01)i; ***H01M 10/0562***(2010.01)i

FI: H01B1/10; C01B25/14; H01B13/00 Z; H01M4/13; H01M4/139; H01M4/62 Z; H01M10/052; H01M10/0562; H01B1/06 A

According to International Patent Classification (IPC) or to both national classification and IPC

**B. FIELDS SEARCHED**

Minimum documentation searched (classification system followed by classification symbols)

H01B1/10; C01B25/14; H01B1/06; H01B13/00; H01M4/13; H01M4/139; H01M4/62; H01M10/052; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-180174 A (IDEMITSU KOSAN CO) 18 November 2021 (2021-11-18) paragraphs [0020]-[0176], fig. 1-14 | 1, 3-6, 11, 16-17 |
| A | paragraphs [0020]-[0176], fig. 1-14 | 2, 7-10, 12-15 |
| A | WO 2020/105737 A1 (IDEMITSU KOSAN CO) 28 May 2020 (2020-05-28) paragraphs [0014]-[0177], fig. 1-11 | 2, 7-10, 12-15 |
| A | WO 2021/029229 A1 (IDEMITSU KOSAN CO) 18 February 2021 (2021-02-18) paragraphs [0011]-[0168], fig. 1-9 | 2, 7-10, 12-15 |
| A | WO 2021/230281 A1 (IDEMITSU KOSAN CO) 18 November 2021 (2021-11-18) paragraphs [0013]-[0129], fig. 1-7 | 2, 7-10, 12-15 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 June 2023** | **20 June 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/013168**

| Patent document cited in search report | | | Publication date (day/month/year) | Patent family member(s) | | | Publication date (day/month/year) |
|---|---|---|---|---|---|---|---|
| JP | 2021-180174 | A | 18 November 2021 | US | 2021/0351434 | A1 | |
| | | | | paragraphs [0052]-[0296], fig. 1-14 | | | |
| WO | 2020/105737 | A1 | 28 May 2020 | WO | 2020/105736 | A1 | |
| | | | | US | 2021/0249685 | A1 | |
| | | | | US | 2021/0391596 | A1 | |
| | | | | paragraphs [0032]-[0298], fig. 1-11 | | | |
| | | | | EP | 3886122 | A1 | |
| | | | | EP | 3886119 | A1 | |
| | | | | CN | 112334999 | A | |
| | | | | CN | 112384993 | A | |
| | | | | KR | 10-2021-0091047 | A | |
| | | | | KR | 10-2021-0091046 | A | |
| WO | 2021/029229 | A1 | 18 February 2021 | US | 2022/0255062 | A1 | |
| | | | | paragraphs [0023]-[0284], fig. 1-9 | | | |
| | | | | KR | 10-2022-0047254 | A | |
| WO | 2021/230281 | A1 | 18 November 2021 | JP | 2021-184382 | A | |
| | | | | US | 2021/0408581 | A1 | |
| | | | | paragraphs [0023]-[0217], fig. 1-5 | | | |
| | | | | CN | 115516577 | A | |
| | | | | KR | 10-2023-0010639 | A | |

Form PCT/ISA/210 (patent family annex) (January 2015)

38

**REFERENCES CITED IN THE DESCRIPTION**

**Patent documents cited in the description**

- JP 2014089971 A